# EUROPEAN PATENT SPECIFICATION

(11) **EP 4 555 698 B1**
(45) Date of publication and mention of the grant of the patent: **21.10.2026**
(21) Application number: 22748232.0
(22) Date of filing: 15.07.2022
(51) Int. Cl.: H04L 65/1016, H04L 61/4588, H04L 65/1083

(54) **INTERNET PROTOCOL MULTIMEDIA SUBSYSTEM (IMS) NODES, CORE NETWORK NODE, AND METHODS THEREIN, IN A COMMUNICATIONS NETWORK**
INTERNETPROTOKOLL-MULTIMEDIA-SUBSYSTEM-KNOTEN, KERNNETZWERKKNOTEN UND VERFAHREN DARIN IN EINEM KOMMUNIKATIONSNETZWERK
NOEUDS DE SOUS-SYSTÈME MULTIMÉDIA DE PROTOCOLE INTERNET (IMS), NOEUD DE RÉSEAU CENTRAL ET PROCÉDÉS ASSOCIÉS, DANS UN RÉSEAU DE COMMUNICATIONS

(43) Date of publication of application: 21.05.2025
(73) Proprietor: Telefonaktiebolaget LM Ericsson (publ), 164 83 Stockholm (SE)
(72) Inventor: CASTELLANOS ZAMORA, David, 28026 Madrid (ES); MERINO VAZQUEZ, Emiliano, 28916 Madrid (ES); RUIZ BALMASEDA, Cristina, 28290 Madrid (ES); CHEN, Ping, Shanghai 200335 (CN)
(74) Representative: Ericsson
(86) International application number: PCT/CN2022/105921
(87) International publication number: WO 2024/011568

(56) References cited:
- ERICSSON: "Common Network Exposure", vol. SA WG2, no. Electronic Meeting; 20200420 - 20200424, 18 June 2020 (2020-06-18), XP051900258, Retrieved from the Internet <URL:https://ftp.3gpp.org/3guInternal/3GPP_Ultimate_CRPacks/SP-200437.zip 23502_CR2178_(Rel-16)_S2-2002713-Common-network-exposure-23502-PA4.docx> [retrieved on 20200618]

## Description

### TECHNICAL FIELD

Embodiments herein relate to a first IMS node, a second IMS node, a Core Network (CN) node, and methods therein. In some aspect they relate to handling a subscription of exposure of an IMS call related monitoring event in a communications network.

### BACKGROUND

In a typical wireless communication network, wireless devices, also known as wireless communication devices, mobile stations, stations (STA) and/or User Equipments (UE), communicate via a Local Area Network such as a Wi-Fi network or a Radio Access Network (RAN) to one or more core networks (CN). The RAN covers a geographical area which is divided into service areas or cell areas, which may also be referred to as a beam or a beam group, with each service area or cell area being served by a radio network node such as a radio access node e.g., a Wi-Fi access point or a radio base station (RBS), which in some networks may also be denoted, for example, a NodeB, eNodeB (eNB), or gNB as denoted in Fifth Generation (5G) telecommunications. A service area or cell area is a geographical area where radio coverage is provided by the radio network node. The radio network node communicates over an air interface operating on radio frequencies with the wireless device within range of the radio network node.

Specifications for the Evolved Packet System (EPS), also called a Fourth Generation (4G) network, have been completed within the 3rd Generation Partnership Project (3GPP) and this work continues in the coming 3GPP releases, for example to specify a 5G network also referred to as 5G New Radio (NR). The EPS comprises the Evolved Universal Terrestrial Radio Access Network (E-UTRAN), also known as the Long Term Evolution (LTE) radio access network, and the Evolved Packet Core (EPC), also known as System Architecture Evolution (SAE) core network. E-UTRAN/LTE is a variant of a 3GPP radio access network wherein the radio network nodes are directly connected to the EPC core network rather than to RNCs used in 3G networks. In general, in E-UTRAN/LTE the functions of a 3G RNC are distributed between the radio network nodes, e.g. eNodeBs in LTE, and the core network. As such, the RAN of an EPS has an essentially "flat" architecture comprising radio network nodes connected directly to one or more core networks, i.e. they are not connected to RNCs. To compensate for that, the E-UTRAN specification defines a direct interface between the radio network nodes, this interface being denoted the X2 interface.

Multi-antenna techniques may significantly increase the data rates and reliability of a wireless communication system. The performance is in particular improved if both the transmitter and the receiver are equipped with multiple antennas, which results in a Multiple-Input Multiple-Output (MIMO) communication channel. Such systems and/or related techniques are commonly referred to as MIMO.

In addition to faster peak Internet connection speeds, the 5G aims at higher capacity than current 4G, allowing higher number of mobile broadband users per area unit, and allowing consumption of higher or unlimited data quantities in gigabyte per month and user. This would make it feasible for a large portion of the population to stream high-definition media many hours per day with their mobile devices, when out of reach of Wi-Fi hotspots. 5G research and development also aims at improved support of Machine to Machine (M2M) communication, also known as the Internet of things, aiming at lower cost, lower battery consumption and lower latency than 4G equipment.

IMS is a well-known 3GPP standard allowing sessions to be setup between two or more parties for a broad variety of services such as voice or video call, interactive messaging sessions or third-party specific applications.

3GPP Technical specification (TS) 23.501 and TS 23.502 define an architecture and procedures for exposure of capabilities of the 5G Core network (5GC).

This includes a Network Exposure Function (NEF) as a function within the 5GC in charge of securely expose network Function (NF) capabilities and events to Application Functions (AF)s external to the 5GC.

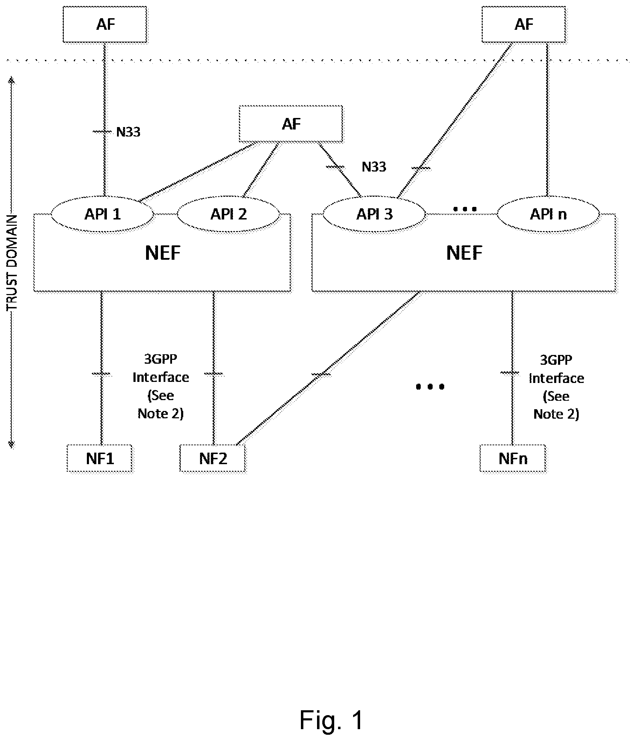

**Figure 1** depicts a non-roaming architecture for NEF in reference point representation, comprising AFs inside and outside a trust domain, NFs, NEFs, Application Programming Interfaces (APIs) I

Within the Exposure architecture in 5GC, a Unified Data Management (UDM) also plays a relevant role to configure exposure monitoring events related to specific UEs or group of UEs. The UDM is responsible to authorize, store and configure the events to be monitored for the target UE at the corresponding serving nodes, e.g. an Access and Mobility Management Function (AMF), and a Session Management Function (SMF), where the UE may be served at any given time.

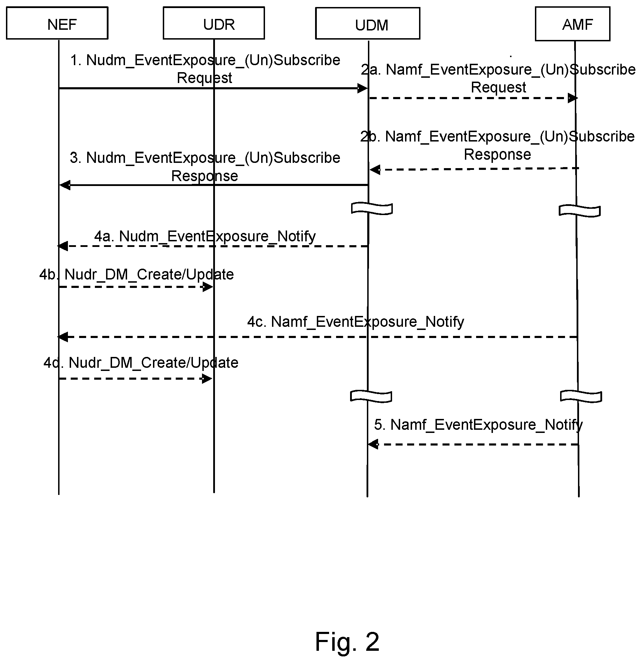

**Figure 2** depicts the information flow for event exposure Subscribe, Unsubscribe and Notify operations via Unified Data Repository (UDM) referred to as Nudm_EventExposure_Subscribe, Unsubscribe and Notify operations. The exposure architecture in 5GC makes use of Service-Based Architecture (SBA) defined APIs to configure the exposure monitoring events and between AF, NEF, UDM and the rest of NFs within the 5GC. In figure 2:
**N** in Nudm, Namf, Nudr is simply the notation chosen by 3GPP to define the reference points names in 5GC.

The 5GC exposure architecture is an evolution of a similar architecture as defined in EPC, that instead of the NEF, UDM uses vice Capability Exposure Function (SCEF) and Home Subscriber Server (HSS).

The IMS subsystem also supports certain exposure capabilities but using a completely different architecture and protocols based on 3GPP TS 3GPP 29.199 and Open Mobile Alliance (OMA) one API (oneAPI) specifications.

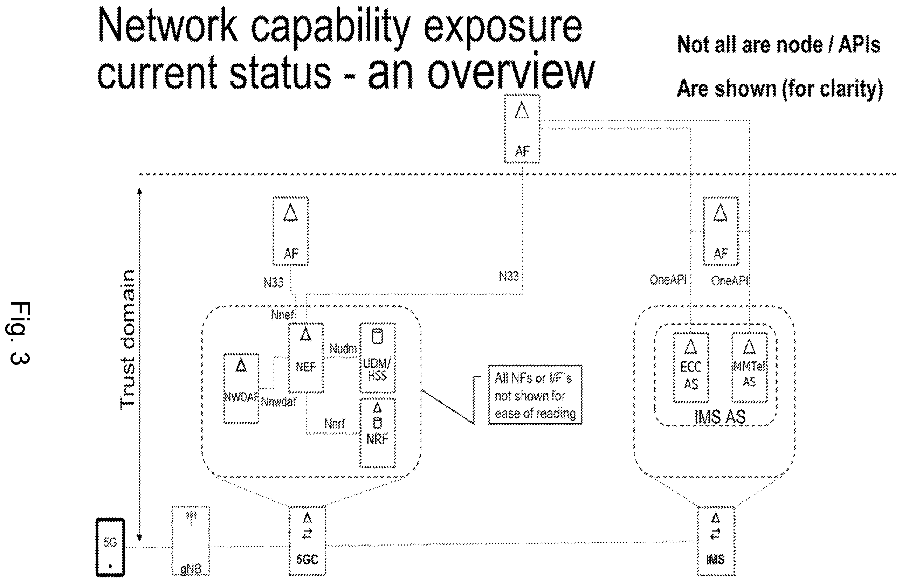

**Figure 3** depicts 5GC Exposure architecture vs existing IMS Exposure capabilities using OMA OneAPI specifications. In Figure 3:
**N 33** is the refence point between an AF and the NEF.

There are certain SBA interactions within the IMS subsystem defined in 3GPP TS 23.228, e.g. between a Serving - Call Session Control Function (S-CSCF), IMS Application Server (AS) and HSS. In particular, there is an SBA service operation defined for the S-CSCF to register in HSS when a UE register in IMS.

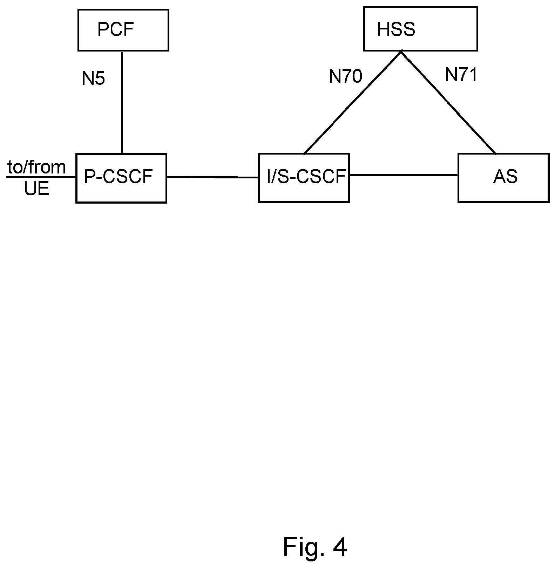

**Figure 4****:** depicts a system architecture to support SBA in IMS in a reference point representation. In Figure 4 it can be seen that the S_CSCF uses reference point N70 to register in HSS. In Figure 4:
**P-CSCF** means Proxy Call Session Control Function
**I/S-CSCF** means Interrogating/Serving Call Session Control Function
**N5** is the reference point between an SBI capable P-CSCF and the PCF
**N70** is the reference point between an SBI capable I/S-CSCF and an SBI capable HSS.
**N71** is the reference point between an SBI capable IMS AS and an SBI capable HSS.

Ericsson: "Common network exposure", 3GPP draft, SP-200437, 18 June 2020, is a 3GPP contribution related to common network event exposure for EPC and 5GC. The contribution specifies a flow for common network event exposure via UDM. The NEF+SCEF indicates to the UDM that it requires the event reporting performed also by EPC domain, i.e. MME reporting via t6a interface, in addition to 5GC domain by requesting explicitly the monitoring in EPC.

### SUMMARY

As part of developing embodiments herein, the inventors have identified a problem that first will be discussed.

Although there are certain SBA interactions within the IMS subsystem defined in 3GPP TS 23.228, these do not cover interactions related to exposure of IMS user registration related capabilities like monitoring of specific events in the IMS system related to a user and/or subscription such as:
- A UEs' session status or call events, e.g. call answered,
- A UEs' supplementary services interactions, e.g. activate voice call forwarding service,
- Triggered Supplementary services, e.g. voice call has been forwarded to voice mail.

These events may be reported by IMS-AS which may be a Service Based Interface (SBI) capable entity according to 3GPP TS 23.228. However, these capabilities can only be exposed currently using 3GPP OMA-TS-REST_NetAPI_CallNotification-V1_0-20190510-D (5.2.2.3).

As mentioned above OMA/Global System for Mobile Communications (GSM) Association (GSMA) has specified as part of the RESTful OneAPI suite of protocols an API for managing event subscriptions for Call Notifications, Call Direction Notifications and Media Interaction Notifications. However, these OMA APIs have not been evolved since 2013 and not all possible Use Cases (UCs), e.g. multi-device, are defined. Also these are only implemented by some IMS vendors.

In summary, there is currently no standard unified mechanisms in IMS, e.g., 3GPP TS 23.228, to manage exposure interactions similarly as in 5GC covering configuration and reporting of IMS user registration monitoring events.

An object of embodiments herein is to improve the performance of a communications network using exposure of call related IMS monitoring events.

According to an aspect of embodiments herein, the object is achieved by a method performed by a first Internet protocol Multimedia System, IMS, node. The method is for handling a subscription of exposure of an IMS call related monitoring event in a communications network.

The first IMS node receives via a second Service Based Interface, SBI, from a Core Network, CN, node, a request for a subscription to expose the IMS call related monitoring event for a User Equipment, UE, in an IMS network. The request indicates a first ID identifying a type of the call related monitoring event, a second ID identifying the network node, from which the request is originating, a third ID identifying the UE, and a fourth ID identifying the CN node.

When the UE has been registered in the first IMS node for an IMS identity, the first IMS node receives from a second IMS node via a fourth SBI, a fifth ID identifying the second IMS node selected to serve the UE in an IMS network.

Based on the fifth ID, the first IMS node sends the subscription request to the second IMS node via a third SBI, instructing the second IMS node to setup the requested subscription.

The subscription when setup, enables the second IMS node to, when a call related event is detected that is related to the setup subscription, report the call related event according to any one out of:
- by direct reporting via a third SBI to the CN node or
- by indirect reporting to the CN node using the second SBI, via the first IMS, node, using the fourth SBI.

The call related event report will be forwarded by the CN node via a first SBI to the network node.

According to another aspect of embodiments herein, the object is achieved by a method performed by a second Internet protocol Multimedia System, IMS, node. The method is for handling a subscription of exposure of an IMS call related monitoring event in a communications network.

The second IMS node sends to the first IMS node, a fifth ID identifying the second IMS node as being selected to serve the UE The UE has been registered in the first IMS node, for an IMS identity.

The second IMS node receives a request from the first IMS node, via a fourth Service Based Interface, SBI. The request is to set up a subscription to expose the IMS call related monitoring event for the UE in an IMS network. The request indicates a first ID identifying a type of the call related monitoring event, a third ID identifying the UE, and a fourth ID identifying a Core Network CN node.

The second IMS node sets up the requested subscription. This enables the second IMS node to, when a call related event is detected that is related to the setup subscription, report the call related event according to any one out of:
- by direct reporting via a third SBI to the CN node or
- by indirect reporting to the CN node using the second SBI, via the first IMS, node, using the fourth SBI.

The call related event report will be forwarded by the CN node via a first SBI to the network node.

According to another aspect of embodiments herein, the object is achieved by a method performed by a Core Network, CN, node. The method is for handling a subscription of exposure of an Internet protocol Multimedia System, IMS, call related monitoring event in a communications network.

The CN node receives a request from a network node, via a first Service Based Interface, SBI. The request is for a subscription to expose the IMS call related monitoring event for a User Equipment, UE, in an IMS network. The request indicates a first ID identifying a type of the call related monitoring event, a second ID identifying the network node, from which the request is originating, a third ID identifying the UE.

The CN node sends to a first IMS node, via a second SBI, the request and a fourth ID identifying the CN node.

The CN node forwards an acknowledgement to the network node, via the first SBI. The acknowledgement is received from the first IMS node, via the via the second SBI. The acknowledgement indicates that the requested subscription is setup.

The subscription when setup, enables the second IMS node to, when a call related event is detected that is related to the setup subscription, report the call related event according to any one out of:
- By direct reporting via a third SBI to the CN node or
- by indirect reporting to the CN node using the second SBI, via the first IMS, node, using the fourth SBI.

The call related event report will be forwarded by the CN node via a first SBI to the network node.

According to another aspect of embodiments herein, the object is achieved by a first Internet protocol Multimedia System, IMS, node, configured to handling a subscription of exposure of an IMS call related monitoring event in a communications network. The first IMS node is further configured to:
receive via a second Service Based Interface, SBI, from a Core Network, CN, node, a request for a subscription to expose the IMS call related monitoring event for a User Equipment, UE, in an IMS network, which request is adapted to indicate a first ID identifying a type of the call related monitoring event, a second ID identifying the network node, from which the request is originating, a third ID identifying the UE, and a fourth ID identifying the CN node,
when the UE has been registered in the first IMS node, for an IMS identity, receive from a second IMS node via a fourth SBI, a fifth ID identifying the second IMS node selected to serve the UE in an IMS network,
based on the fifth ID, send the subscription request to the second IMS node IMS-Application Server, via a third SBI instructing the second IMS node to setup the requested subscription,
wherein the subscription when setup, is adapted to enable the second IMS node to, when a call related event is detected that is related to the setup subscription, report the call related event according to any one out of:
   - by direct reporting via a third SBI to the CN node or
   - by indirect reporting to the CN node using the second SBI, via the first IMS, node, using the fourth SBI,
which call related event report will be forwarded by the CN node via a first SBI to the network node.

According to another aspect of embodiments herein, the object is achieved by a second Internet protocol Multimedia System, IMS, node, configured to handle a subscription of exposure of an IMS call related monitoring event in a communications network. The second IMS node is further configured to:
send to the first IMS node, a fifth ID identifying the second IMS node as being selected to serve the UE, which UE is adapted to have been registered in the first IMS node, for an IMS identity,
receive from the first IMS node, via a fourth Service Based Interface, SBI, a request to set up a subscription to expose the IMS call related monitoring event for the UE in an IMS network, which request is adapted to indicate a first ID identifying a type of the call related monitoring event, a third ID identifying the UE, and a fourth ID identifying a Core Network CN node,
set up the requested subscription, enabling the second IMS node to, when a call related event is detected that is related to the setup subscription, report the call related event according to any one out of:
   - by direct reporting via a third SBI to the CN node or
   - by indirect reporting to the CN node using the second SBI, via the first IMS, node, using the fourth SBI,
which call related event report is adapted to be forwarded by the CN node via a first SBI to the network node.

According to another aspect of embodiments herein, the object is achieved by a Core Network, CN, node, configured to handle a subscription of exposure of an Internet protocol Multimedia System, IMS, call related monitoring event in a communications network. The CN node is further configured to:
receive from a network node, via a first Service Based Interface, SBI, a request for a subscription to expose the IMS call related monitoring event for a User Equipment, UE, in an IMS network, which request is adapted to indicate a first ID identifying a type of the call related monitoring event, a second ID identifying the network node, from which the request is originating, a third ID identifying the UE,
send to a first IMS node, via a second SBI, the request and a fourth ID identifying the CN node,
forward to the network node, via the first SBI, an acknowledgement received from the first IMS node, via the via the second SBI, adapted to indicate that the requested subscription is setup,
wherein the subscription when setup, is adapted to enable the second IMS node to, when a call related event is detected that is related to the setup subscription, report the call related event according to any one out of:
   - by direct reporting via a third SBI to the CN node or
   - by indirect reporting to the CN node using the second SBI, via the first IMS, node, using the fourth SBI,
which call related event report is adapted to be forwarded by the CN node via a first SBI to the network node.

Embodiments herein e.g. brings the following advantages of achieving IMS User Registration Related Monitoring Capabilities that may be configured and reported by using SBI interactions which uses an architecture similar to the one used in 5GC.

IMS Call Related Monitoring Capabilities may be be configured in the second IMS node, e.g. an IMS Application Server (AS) serving the UE by means of enhancing IMS UECM service in HSS. Additionally, the service according to embodiments herein, in the second IMS node, e.g. the IMS-AS, allows call event reporting using SBI interactions and an architecture similar to the one used in 5GC. In particular, the use of a CN node, e.g. a NEF as central point of exposure interactions between the 3GPP defined CNs and the application domain contributes to foster support of exposure use cases in the IMS domain.

### BRIEF DESCRIPTION OF THE DRAWINGS

Examples of embodiments herein are described in more detail with reference to attached drawings in which:
- **Figure 1**: is a schematic block diagram illustrating prior art.
- **Figure 2**: is a schematic sequence diagram illustrating prior art.
- **Figure 3**: is a schematic block diagram illustrating prior art.
- **Figure 4**: is a schematic block diagram illustrating prior art.
- **Figure 5**: is a schematic block diagram illustrating embodiments of a communications network.
- **Figure 6**: is a flowchart depicting embodiments of a method in a first IMS node.
- **Figure 7**: is a flowchart depicting embodiments of a method in a second IMS node.
- **Figure 8**: is a flowchart depicting embodiments of a method in a CN node.
- **Figure 9**: is a schematic block diagram illustrating embodiments of a communications network.
- **Figure 10**: is a signaling diagram depicting embodiments of a method.
- **Figure 11**: is a signaling diagram depicting embodiments of a method.
- **Figure 12**: is a signaling diagram depicting embodiments of a method.
- **Figure 13a-b**: are schematic block diagrams illustrating embodiments of a first IMS node.
- **Figure 14a-b**: are schematic block diagrams illustrating embodiments of a CN node.
- **Figure 15a-b**: are schematic block diagrams illustrating embodiments of a second IMS node.
- **Figure 16**: schematically illustrates a telecommunication network connected via an intermediate network to a host computer.
- **Figure 17**: is a generalized block diagram of a host computer communicating via a base station with a user equipment over a partially wireless connection.
- **Figures 18-21**: are flowcharts illustrating methods implemented in a communication system including a host computer, a base station and a user equipment.

### DETAILED DESCRIPTION

Embodiments herein relate to a communications network and the handling of Exposure of Multimedia Sessions Monitoring Capabilities using SBA protocols.

According to some embodiments herein, SBI interactions to expose IMS Call Related Monitoring Capabilities that will be detected and reported by a second IMS node, e.g. an IMS AS, are provided.

A configuration of the IMS monitoring events is e.g. performed as follows:
- An AF requests a configuration of call related monitoring events via a NEF.
- In turn, the NEF relies on the HSS to configure the monitoring event in the corresponding IMS-AS serving the target UE may e.g. be begun at that moment. The HSS is e.g. made aware of the IMS-AS serving each UE based on new IMS-AS registration procedure in HSS re-using existing Nhss_UECM service operation as defined in 3GPP TS 23.228. UECM when used herein e.g. means UE Context Management.
- The configuration of the call related IMS event exposure capabilities may be supported by the NEF and the HSS are using SBA Nnef/hss_imsEE services.
- An SBI service according to embodiments herein, with various service operations specific for the configuration and reporting of IMS event exposure capabilities are e.g. provided to be supported by the IMS-AS. IMS-AS becomes an NF producer within the SBA architecture and thus is required to register its services, e.g. a NimsAsEventExposure service in NRF.

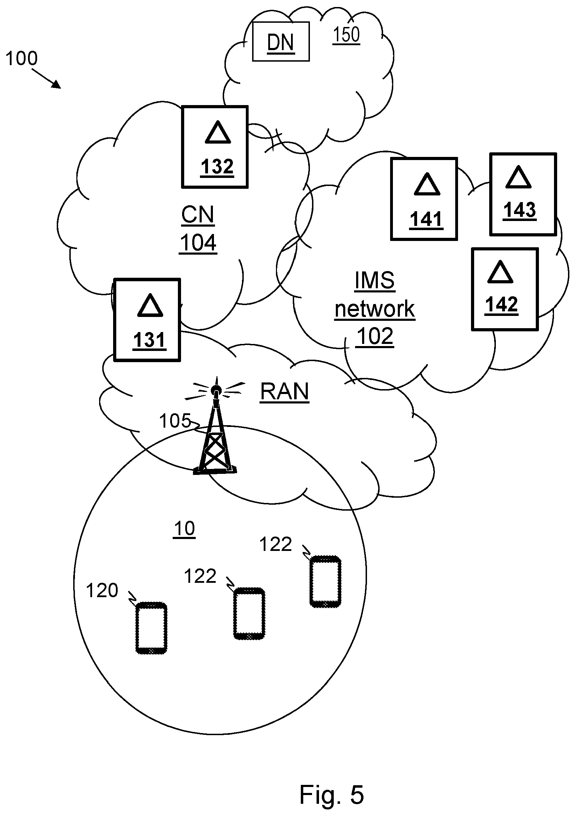

**Figure 5** is a schematic overview depicting **a communications network 100** wherein embodiments herein may be implemented. The communications network 100 comprises one or more **RANs,** one or more IMS networks, e.g. the **IMS network 102,** and one or more CNs, e.g. the **CN 104.** The communications network 100 may use a number of different technologies, such as Wi-Fi, Long Term Evolution (LTE), LTE-Advanced, 5G, New Radio (NR), 6G, Wideband Code Division Multiple Access (WCDMA), Global System for Mobile communications/enhanced Data rate for GSM Evolution (GSM/EDGE), or Ultra Mobile Broadband (UMB), just to mention a few possible implementations. Embodiments herein relate to recent technology trends that are of particular interest in a 5G context, however, embodiments are also applicable in further development of the existing wireless communication systems such as e.g. WCDMA and LTE.

A number of RAN nodes operate in the communications network 100 such as e.g. a **RAN node 105.** The RAN network node 105 provides radio coverage in a number of cells which may also be referred to as a beam or a beam group of beams, such as a **cell 10** provided by the RAN node 105.

The RAN node 105 may be any of an NG-RAN node, a transmission and reception point e.g. a base station, a radio access network node such as a Wireless Local Area Network (WLAN) access point or an Access Point Station (AP STA), an access controller, a base station, e.g. a radio base station such as a NodeB, an evolved Node B (eNB, eNode B), a gNB, a base transceiver station, a radio remote unit, an Access Point Base Station, a base station router, a transmission arrangement of a radio base station, a stand-alone access point or any other network unit capable of communicating with a UE 120 within the service area served by the network node 105 depending e.g. on the first radio access technology and terminology used. The network node 105 may be referred to as a serving network node and communicates with UEs such as the UE 120, with Downlink (DL) transmissions to the UE 120, and in Uplink (UL) transmissions from the UE 120.

A number of UEs operate in the communication network 100, such as e.g. the **UE 120.** The UE 120 may also be referred to as a UE, an loT device, a mobile station, a non-access point (non-AP), a STA, and/or a wireless terminal. It should be understood by the skilled in the art that "UE" is a non-limiting term which means any terminal, wireless communication terminal, user equipment, Machine Type Communication (MTC) device, Device to Device (D2D) terminal, a radio device in a vehicle, or node e.g. smart phone, laptop, mobile phone, sensor, relay, mobile tablets or even a small base station communicating within a cell.

A **CN node 131** operates in the CN network 104. The CN node 131 may e.g. be an NEF node. The CN node 131 may e.g., be a function node within the CN network 104, e.g. a 5GC, and may be in charge of securely expose NF capabilities and events to AFs external to the 5GC.

A **network node 132** operates in communications network 100. The network node 132 may e.g. be an AF node. The CN node 131 may e.g., operate in the CN 104, or in an external or an untrusted network.

E.g., **first IMS node 141,** a **second IMS node 142** and third IMS node 143 operate in the IMS network 102. The IMS network 102 is an architecture for delivering media content over an IP packet switched transport. The first IMS node 141 may e.g., be an HSS node, and the second IMS node 142 may e.g. be an IMS AS node, and the third IMS node 143 may e.g. be a S-CSCF node.

Methods herein may be performed by CN node 131, the first IMS node 141 and the second IMS node 142. As an alternative, a Distributed Node (DN) and functionality, e.g. comprised in a **cloud 150** as shown in Figure 5, may be used for performing or partly performing the methods herein.

An IMS service, e.g. an IMS UECM service is enhanced to allow an IMS AS serving the UE to register in HSS so that the HSS is capable of forwarding the received event subscription request to the correct IMS AS instance.

A service produced by IMS AS, e.g. NimsAsEventExposure, is defined so that HSS is capable of invoking the service in order to subscribe and/or configure the session related event and instruct IMS AS to notify NEF when the event is detected.

A number of embodiments will now be described, some of which may be seen as alternatives, while some may be used in combination.

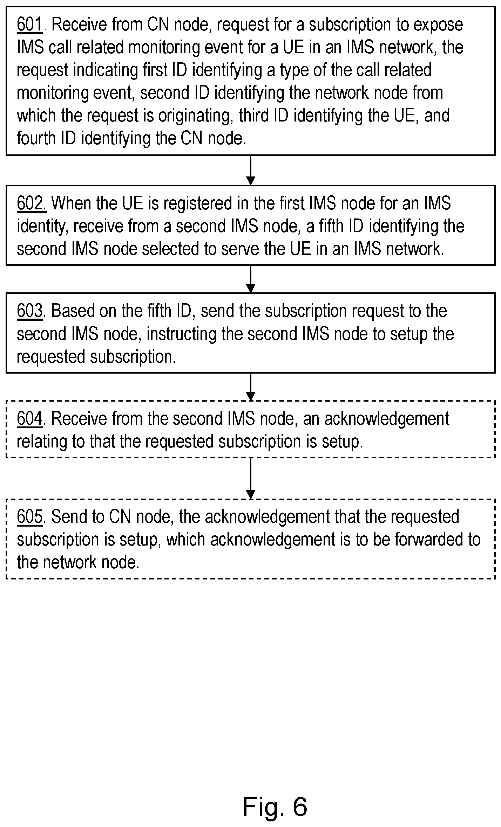

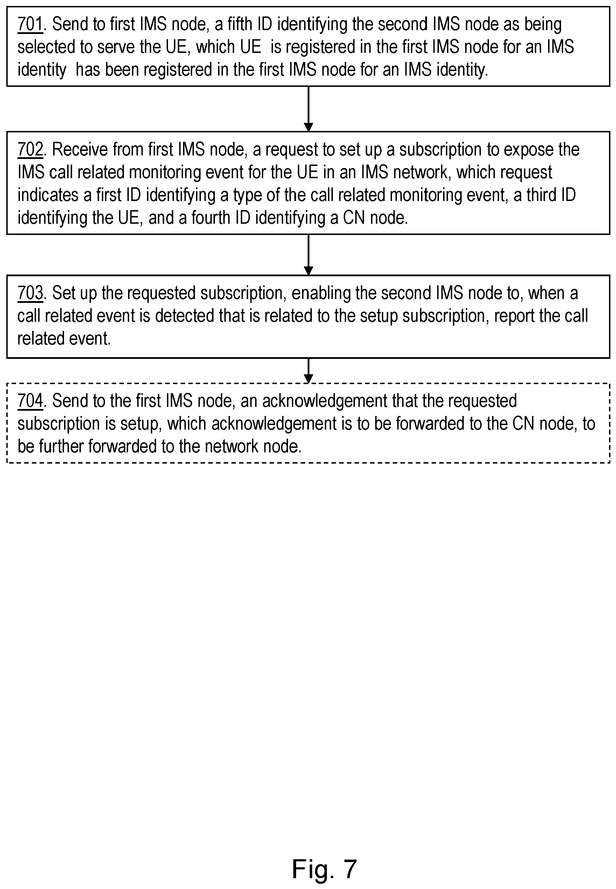

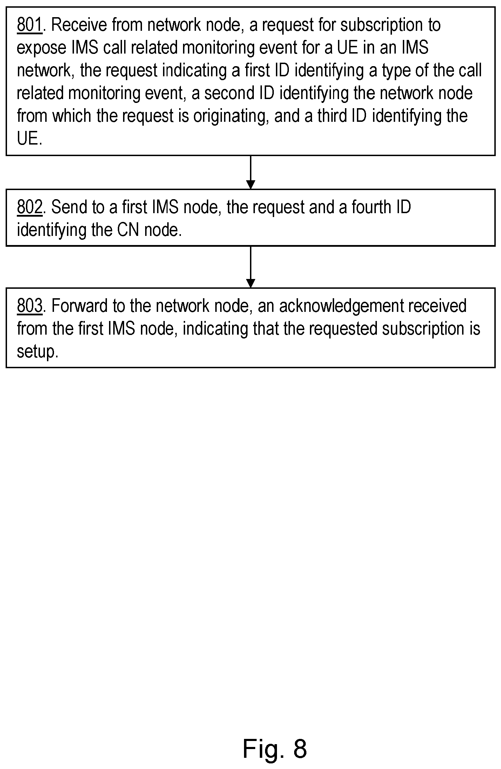

The embodiments of a method will be first be generally described in view of the first IMS node 141 together with Figure 6, then in view of the second IMS node 142 together with Figure 7, and finally in view of the CN node 131 together with Figure 8. This will be followed by a more detailed description.

**Figure 6** shows example embodiments of a method performed by a first IMS node 141, e.g. an HSS. The method is for handling a subscription of exposure of an IMS call related monitoring event in the communications network 100.

According to an example scenario, the UE 120 may e.g., have sessions setup or to be setup between the UE 120 and one or more parties for a broad variety of call related services such as voice or video call, interactive messaging sessions or third-party specific applications.

The method comprises any one or more of the following actions, which actions may be taken in any suitable order. Actions that are optional are presented in dashed boxes in Figure 6.

### Action 601

The first IMS node 141 receives a request via a **second SBI** Nxy from the CN node 131. The CN node 131 may e.g., be a NEF. The request is a request for a subscription to expose the IMS call related monitoring event for the UE 120 in the IMS network 102.

The call related event may e.g. comprise any one or more out of the UE's 120 session status, the UE's 120 call events, e.g., call answered, the UE's 120 supplementary services interactions, e.g., activate voice call forwarding service, and a triggered supplementary service, e.g., voice call has been forwarded to voice mail.

A triggered supplementary service when used herein may e.g., mean that voice call has been forwarded to voice mail.

A supplementary services interactions when used herein may e.g., mean that activate voice call forwarding service.

The request indicates:
A **first ID** identifying a type of the call related monitoring event,
a **second ID** identifying the network node 132, e.g., an AF, from which the request is originating,
a **third ID** identifying the UE 120, and
a **fourth ID** identifying the CN node 131, e.g., a NEF.

It should be noted that the UE 120 in some embodiments, may be represented by one or more UEs or a group of UEs. In these embodiments, the **third ID** identifying the first UE 120 comprises a list of UEs identifying the respective UE in the one or more UEs 120, 122 or UEs in the group of UEs 120, 122.

### Action 602

When the UE 120 has been registered in the first IMS node 141, e.g. an HSS, for an IMS identity, the first IMS node 141 receives a **fifth ID** from a second IMS node 142, e.g. an IMS-AS, via a **fourth SBI** N71. The **fifth ID** identifies the second IMS node 142 that has been selected to serve the UE 120 in the IMS network 102.

It should be noted that this Action may be performed after Action603 or 604.

### Action 603

Based on the **fifth ID,** the first IMS node 141, sends the subscription request to the second IMS node 142, e.g., the IMS-AS, via the fourth SBI N71. The subscription request instructs the second IMS node 142 to setup the requested subscription. The same ref point N71 is used by the first IMS node 141, such as the IMS-AS, to register in HSS and for the HSS to subscribe in the IMS AS.

The subscription when setup, enables the second IMS node 142 to, when a call related event is detected that is related to the setup subscription, report the call related event according to any one out of:
- By direct reporting via a **third SBI** Nyy to the CN node 131, e.g., the NEF, or
- by indirect reporting to the CN node 131 using the **second SBI** Nxy, via the first IMS, node 141, e.g. , the HSS, using the **fourth SBI** N71.

The call related event report may then be forwarded by the CN node 131 via a **first SBI** Nxx to the network node 132, e.g., the AF.

### Action 604

The first IMS node 141 may receive an acknowledgement from the second IMS node 142, e.g., the IMS-AS, via the **fourth SBI** N71. The acknowledgement relates to that the requested subscription is setup. If a report of a call related event is available, it may be sent together with the acknowledgement.

### Action 605

The first IMS node 141 may send an acknowledgement to the CN node 131, e.g., the NEF, via the **second SBI** Nxy. This may in some embodiments be the acknowledgement received from the second IMS node 142, e.g., the IMS-AS., if it has been received before this action. The acknowledgement relates to that the requested subscription is setup. The acknowledgement is to be forwarded to the network node 132, e.g., the AF. The acknowledgement is sent when any one out of:
- Before the UE 120 has been registered in the first IMS node 141, e.g., the HSS, for the IMS identity, e.g., before Actions 602 and 603, or
- after the UE 120 has been registered in the first IMS node 141, HSS, for an IMS identity, e.g., after Actions 602 and 603. This will be described more in detail below.

If a report of a call related event is available, the first IMS node 141 may send it together with the acknowledgement.

**Figure 7** shows example embodiments of a method performed by the second IMS node 142, e.g., the IMS AS. The method is for handling a subscription of exposure of an IMS call related monitoring event in a communications network 100.

According to the example scenario described above, the UE 120 may e.g., have sessions setup or to be setup between the UE 120 and one or more parties for a broad variety of call related services such as voice or video call, interactive messaging sessions or third-party specific applications.

The method comprises any one or more of the following actions, which actions may be taken in any suitable order. Actions that are optional are presented in dashed boxes in Figure 7.

### Action 701

The second IMS node 142 sends a **fifth ID** to the first IMS node 141, e.g., an HSS. The fifth ID identifies the second IMS node 142 as being selected to serve the UE 120. The UE 120 has been registered in the first IMS node 141, e.g., the HSS, for an IMS identity. This procedure will be described more in detail below. This may e.g., be sent to inform the first IMS node 141 that the second IMS node 142 identified by the fifth ID, has been selected e.g., by a S-CSFS, to serve the UE 120 in the IMS network 102. In this way the first IMS node 141 knows where to send a request to set up a subscription to expose the IMS call related monitoring event for the UE 120 in the IMS network 102.

### Action 702

The second IMS node 142 receives a request from the first IMS node 141, HSS, via a **fourth SBI** N71. The request requests to set up a subscription to expose the IMS call related monitoring event for the UE 120 in the IMS network 102. The call related event may e.g. comprise any one or more out of the UE's 120 session status, the UE's 120 call events, e.g., call answered, the UE's 120 supplementary services interactions, e.g., activate voice call forwarding service, and a triggered supplementary, e.g., voice call has been forwarded to voice mail.

The request indicates a **first ID** identifying a type of the call related monitoring event, a **third ID** identifying the UE 120, and a **fourth ID** identifying the CN node 131, e.g., the NEF.

As mentioned above, it should be noted that the UE 120 in some embodiments, may be represented by one or more UEs or a group of UEs. In these embodiments, the **third ID** identifying the first UE 120 comprises a list of UEs identifying the respective UE in the one or more UEs 120, 122 or UEs in the group of UEs 120, 122.

### Action 703

The second IMS node 142 sets up the requested subscription. The setup subscription enables the second IMS node 142, e.g. the IMS-AS, to, when a call related event is detected that is related to the setup subscription, report the call related event. The call related event is reported according to any one out of:
- By direct reporting via a **third SBI** Nyy to the CN node 131, e.g., the NEF, or
- by indirect reporting to the CN node 131 using the **second SBI** Nxy, via the first IMS node 141, e.g., the HSS, using the **fourth SBI** N71,

The call related event report will be forwarded by the CN node 131, via a **first SBI** Nxx to the network node 132, e.g., the AF.

### Action 704

The second IMS node 142 may send an acknowledgement to the first IMS node 141, e.g. the HSS. The acknowledgement relates to that the requested subscription is setup. The acknowledgement is to be forwarded to the CN node 131, e.g., the NEF, via the via the **second SBI** Nxy to be further forwarded to the network node 132, e.g., the AF, via the **first SBI** Nxx.

If a report of a call related event is available, it may be sent together with the acknowledgement.

**Figure 8** shows example embodiments of a method performed by the CN node 131, e.g. the NEF. The method is for handling a subscription of exposure of an IMS call related monitoring event in the communications network 100.

According to the example scenario described above, the UE 120 may e.g., have sessions setup or to be setup between the UE 120 and one or more parties for a broad variety of call related services such as voice or video call, interactive messaging sessions or third-party specific applications.

The method comprises any one or more of the following actions, which actions may be taken in any suitable order. Actions that are optional are presented in dashed boxes in Figure 8.

### Action 801

The CN node 131 receives a request from the network node 132, e.g., the AF, via a **first SBI** Nxx. The request is for a subscription to expose the IMS call related monitoring event for the UE 120 in the IMS network 102.

The call related event may e.g. comprise any one or more out of the UE's 120 session status, the UE's 120 call events, e.g., call answered, the UE's 120 supplementary services interactions, e.g., activate voice call forwarding service, and a triggered supplementary, e.g., voice call has been forwarded to voice mail.

The request indicates a **first ID** identifying a type of the call related monitoring event, a **second ID** identifying the network node 132, e.g. the AF, from which the request is originating, a **third ID** identifying the UE 120.

As mentioned above, it should be noted that the UE 120 in some embodiments, may be represented by one or more UEs or a group of UEs. In these embodiments, the **third ID** identifying the first UE 120 comprises a list of UEs identifying the respective UE in the one or more UEs 120, 122 or UEs in the group of UEs 120, 122.

### Action 802

The CN node 131 sends the request and a **fourth ID** to the first IMS node 141, e.g., the HSS, via a **second SBI** Nxy. The **fourth ID** identifies the CN node 131, e.g., the NEF.

### Action 803

An acknowledgement has been received from the first IMS node 141, e.g., the HSS, via the **second SBI** Nxy. The CN node 131 forwards the acknowledgement to the network node 132, e.g., the AF, via the **first SBI** Nxx. The acknowledgement indicates that the requested subscription is setup.

The subscription when setup, enables the second IMS node 142, e.g., the IMS-AS, to, when a call related event is detected that is related to the setup subscription, report the call related event. The call related event may be reported according to any one out of:
- By direct reporting via a third SBI Nyy to the CN node 131 NEF, or
- by indirect reporting to the CN node 131 NEF using the second SBI Nxy, via the first IMS, node 141, HSS, using the fourth SBI N71.

The call related event report will be forwarded by the CN node 131 NEF, via a first SBI Nxx to the network node 132 AF.

If a report of a call related event is available, it may be sent together with the acknowledgement.

Some embodiments e.g., related to the method described together with Figures 6-8 above may comprise any one or more out of:
- The CN node 131 is represented by a NEF node,
- the network node 132 is represented by an AF node,
- the first IMS node 141 is represented by a HSS IMS node,
- the second IMS node 142 is represented by an IMS-AS,
- the UE 120 comprises one or more UEs or a group of UEs,
- the third ID identifying the first UE 120 comprises a list of UEs identifying the respective UE 120 and: the one or more UEs 120, 122 or UEs in the group of UEs, and
- the call related event comprises any one or more out of:
   the UE's 120 session status,
   the UE's 120 call events,
   the UE's 120 supplementary services interactions, and
   triggered supplementary service.

IDs used herein may comprise:
- The **first ID** identifying the type of the call related monitoring event,
- the **second ID** identifying the network node 132, e.g. the AF,
- the **third ID** identifying the UE 120
- the **fourth ID** identifying the CN node 131, e.g. the NEF,
- the **fifth ID** identifying the second IMS node 142, e.g. the IMS AS. selected to serve the UE 120 in an IMS network 102.

Embodiments herein such as mentioned above will now be further described and exemplified. The text below is applicable to and may be combined with any suitable embodiment described above.

**Architecture for exposure of IMS User Registration Related Monitoring Capabilities using SBA.**

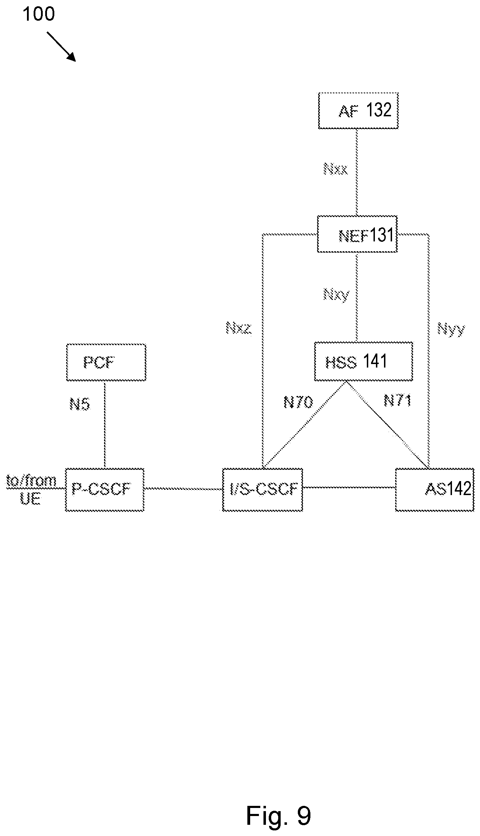

An example of an architecture to support exposure of IMS user registration related monitoring capabilities using SBA according to embodiments herein is depicted in Figure 9. The architecture is comprised in the communications network 100. In Figure 9, the CN node 131 is referred to as NEF 131, the network node 132 is referred to as AF 132, the first IMS node 141 is referred to as HSS 141, and the second IMS node 142 is referred to as AS 142.

The following SBIs depicted in Figure 9, also referred to as reference points may be provided by embodiments herein:
The first **SBI Nxx** is a reference point between the CN node 131, e.g. the NEF, and the network node 132 e.g. the AF.

The second **SBI Nxy** is a reference point between the first IMS node 141, e.g. the HSS and the CN node 131, e.g., the NEF.

The third **SBI Nyy** is a reference point between the CN node 131, e.g. the NEF and the second IMS node 142, e.g., the IMS-AS.

The fourth **SBI N71** is a reference point between the first IMS node 141, e.g. the HSS and the and the second IMS node 142, e.g., the IMS-AS.

A fifth **SBI Nxz** is a reference point between an SBI capable I/S-CSCF, and the CN node 131, e.g. NEF.

The existing SBI reference point **N70** is according to some embodiments herein, used for interactions between HSS, such as the first IMS node 131, and S-CSCF, such as the third IMS node 143, to handle interactions relating to a registering of the UE 120 in the first IMS node 141, for an IMS identity.

An SBI service offered by the second IMS node 142, e.g., the IMS-AS is also provided according to some embodiments herein: **NimsAsEventExposure** is a Service-based interface exhibited by IMS-AS.

The existing reference point **SBI N71** is extended to include the interactions between the first IMS node 141, e.g. the HSS ,and the second IMS node 142, e.g., the IMS-AS 142 to:
- Register in the first IMS node 141, e.g. the HSS, the second IMS node 142, e.g., the IMS-AS and the second IMS node 142, e.g., the IMS-AS function type, e.g. Multimedia Telephony (MMTEL) AS, and Service Centralization and Continuity (SCC)-AS where an IMS user such as the UE 120 may be allocated in the context of an IMS Registration.
- Configure and/or subscribe IMS call related monitoring events in the second IMS node 142, e.g., the IMS-AS, using the **NimsAsEventExposure** service according to embodiments herein.

Reference points Nxx and Nxy and extensions to Nnef and Nhss services defined above provide requests for configuration of call related events between the network node 132, e.g. the AF, the CN node 131, e.g. the NEF, and the first IMS node 141, e.g. the HSS, and for the reporting of the corresponding events between the CN node 131, e.g. the NEF and the network node 132, e.g. the AF.

In some embodiments, the following SBI services are extended to support exposure of IMS user registration related monitoring capabilities:
**Nnef_imsEE** which is a Service-based interface exhibited by the NEF such as the CN node 131.
**Nhss_imsEE** which is a Service-based interface exhibited by an SBI capable HSS, such as the first IMS node 131, for IMS event exposure.

### Procedures for IMS-AS registration

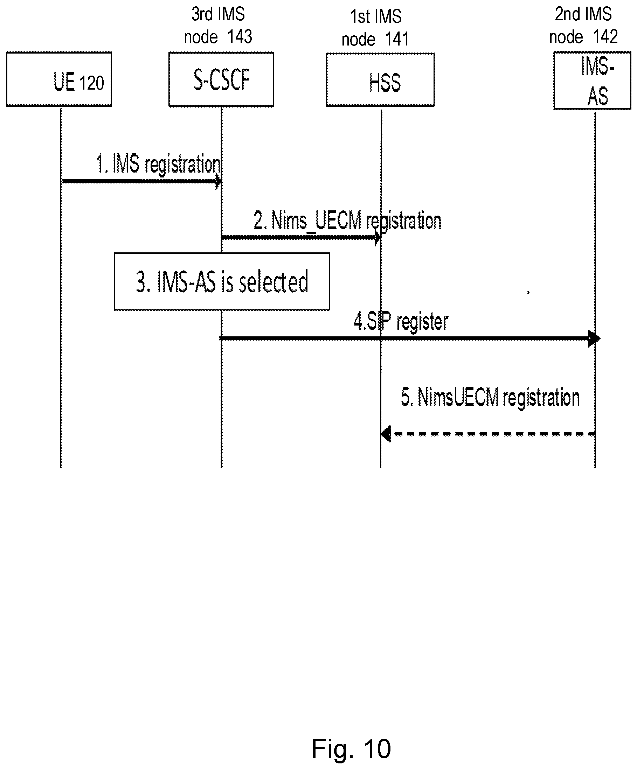

The Procedures for second IMS node 142, e.g., the IMS-AS registration in the first IMS node 141, e.g. the HSS. Is depicted in **Figure 10****.**

The steps 1-4 of the IMS registration are performed as per existing procedures.

**Step 1.** The UE 120 sends an IMS registration to the third IMS node 143, e.g. the S-CSCF.

**Step 2.** The third IMS node 143, e.g. the S-CSCF, sends **Nims_UECM** registration to the first IMS node 141, e.g. the HSS. UECM when used herein may mean ... **/Please define.**

**Step 3.** The third IMS node 143, e.g. the S-CSCF, selects the second IMS node 142, e.g. the IMS AS, to serve the UE 120 in the IMS 102.

**Step 4.** The third IMS node 143, e.g. the S-CSCF, sends a Session Initiation Protocol (SIP) registering, also referred to as a SIP 3rd party registration request, of the UE 120 to the second IMS node 142, e.g. the IMS AS, indicating that it has been selected to serve the UE 120 in the IMS 102.

**Step 5.** According to embodiments herein, when the second IMS node 142, e.g. the IMS AS, is selected by the third IMS node 143, e.g. the S-CSCF, second IMS node 142, e.g. the IMS AS, performs a UECM registration to the first IMS node 141, e.g. the HSS, e.g. comprising IMS AS ID, and IMS AS type, so that the first IMS node 141, e.g. the second IMS node 142, e.g. the IMS AS, is made aware of current IMS AS serving the UE 120.

### Procedures for subscribing to exposure of IMS call related monitoring events

The procedures to support exposure of IMS Call related monitoring capabilities using SBA provided herein are described below in two embodiments.

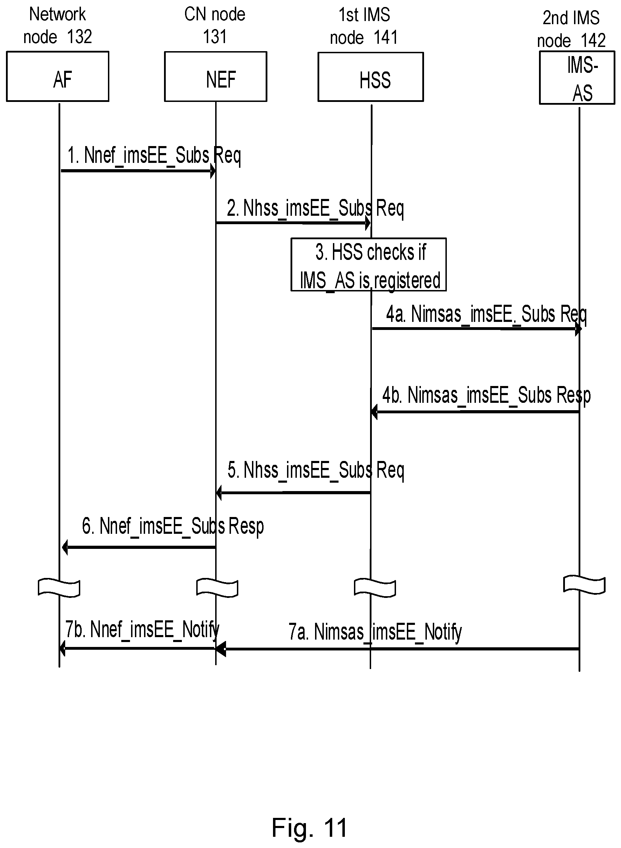

A first embodiment of procedures to support exposure of IMS Call Related Monitoring Capabilities using SBA provided by some embodiments herein is shown in Figure 11. In these embodiments, the UE 120 is IMS registered according to the above procedure before the method described in Figure 11 has started.

The method e.g., comprises:
**Steps 1-2:** The AF such as the network node 132 subscribes to one or several Event(s) (identified by Event Type) for the target UE 120, or a group of UEs or any UE, e.g. to call and/or session related events such as for example, multimedia session status change. The AF such as the network node 132 provides the associated notification endpoint of the network node 132 such as the AF, referred to as the **second ID** identifying the network node 132. This is performed by sending a **Nnef_lmsEventExposure_Subscribe request.** If the event is related to an IMS identity and requires HSS, such as the first IMS node 131, assistance, the NEF such as the CN node 131 subscribes to received Event(s) and provides an associated notification endpoint of the NEF such as the CN node 131, referred to as the **fourth ID** identifying a CN node 131, to the HSS, such as the first IMS node 131. This is performed by sending an **Nhss_imsEventExposure_Subscribe request** to the first IMS node 141, such as the HSS. If the reporting event subscription is authorized by the HSS, such as the first IMS node 131, the HSS stores the association of the event and the requester identity. The HSS, such as the first IMS node 131, examines the event type, the request indicates the **first ID** identifying a type of the monitoring event. The HSS, may further examine subscription details to determine whether one or more call related events are to be detected by the IMS-AS, such as the second IMS node 142. In this case, for those applicable events that are detected by the IMS-AS, HSS is responsible for creating event exposure subscriptions whenever the IMS-AS is registered in HSS for the IMS identity, such as the first IMS node 131, monitors the call related event(s). Step 1 is related to and may be combined with Action 801, and Step 2 is related to and may be combined with Actions 802 and 601.

**Step 3:** The HSS such as the first IMS node 131, checks whether there is an IMS-AS, e.g. MMTEL AS, such as the second IMS node 142 for the required call event type for the UE 120.

**Step 4a:** If there is an IMS-AS, such as the second IMS node 142, already registered, the HSS, such as the first IMS node 131, creates an **Nimas_ism_EventExposure Subscribe/Unsubscribe** request and sends it to the registered the IMS-AS.

The request includes the subscription details including the **first ID** and the **fourth ID** identifying the associated notification endpoint of the NEF such as the CN node 131. This is referred to as direct reporting.

Or the HSS, such as the first IMS node 131, indirect reports via the HSS, such as the first IMS node 131.

**Step 4b:** The IMS-AS, such as the second IMS node 132, answers with an **Nimas_ism_EventExposure Subscribe/Unsubscribe** response with a current call event status if available. Steps 4a and b are related to and may be combined with Actions 602-604 and 702-704.

**Step 5.** The HSS, such as the first IMS node 131 provides an acknowledgement to the NEF, such as the CN node 131, that the event has been successfully subscribed, e.g. in a **Nhss_imsEE Subscribe/Unsubscribe** response.

**Step 6.** The NEF, such as the CN node 131, forwards the acknowledgement to the AF, such as the Network node 132, e.g. in a **Nnef_imsEE Subscribe/Unsubscribe** response.

**Step 7.** Afterwards, when the condition of the subscribed event is met, the IMS-AS, such as the second IMS node 142, notifies the NEF, such as the CN node 131, which forwards the event notification to the AF, such as the Network node 132.

Step 5-7 is related to and may be combined with Action 605, 704, and 803.

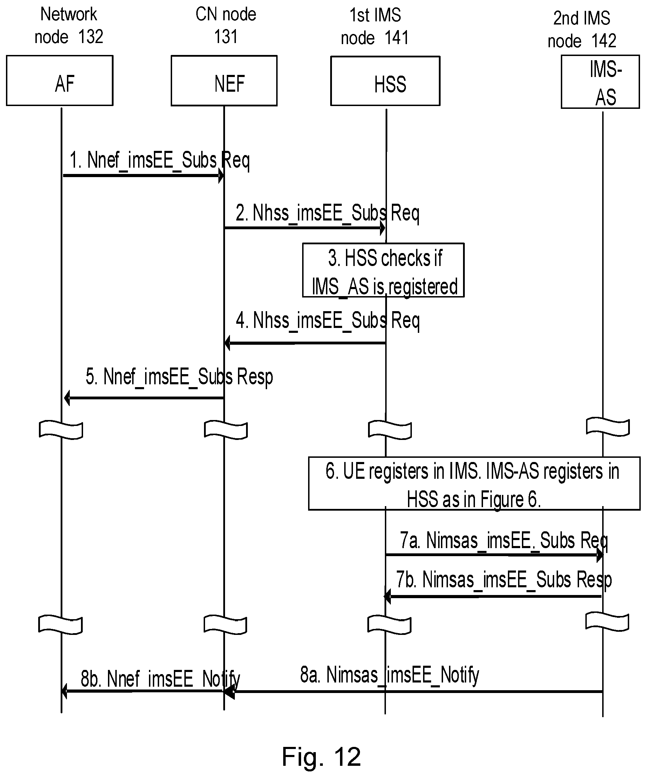

A second embodiment of procedures to support exposure of IMS Call Related Monitoring Capabilities using SBA provided by some embodiments herein is shown in **Figure 12****.** In these embodiments, the UE 120 is not IMS registered before the method starts but during the ongoing method.

The method e.g., comprises:
**Steps 1-2:** The AF such as the network node 132 subscribes to one or several Event(s) (identified by Event Type) for the target UE 120, or a group of UEs or any UE, e.g. to call and/or session related events such as for example, multimedia session status change. The AF such as the network node 132 provides the associated notification endpoint of the network node 132 such as the AF, referred to as the **second ID** identifying the network node 132. This is performed by sending a **Nnef_ImsEventExposure_Subscribe request.** If the event is related to an IMS identity and requires HSS, such as the first IMS node 131, assistance, the NEF such as the CN node 131 subscribes to received Event(s) and provides an associated notification endpoint of the NEF such as the CN node 131, referred to as the **fourth ID** identifying a CN node 131, to the HSS, such as the first IMS node 131. This is performed by sending an **Nhss_imsEventExposure_Subscribe request** to the first IMS node 141, such as the HSS. If the reporting event subscription is authorized by the HSS, such as the first IMS node 131, the HSS stores the association of the event and the requester identity. The HSS, such as the first IMS node 131, examines the event type, the request indicates the **first ID** identifying a type of the monitoring event. The HSS, may further examine subscription details to determine whether one or more call related events are to be detected by the IMS-AS, such as the second IMS node 142. In this case, for those applicable events that are detected by the IMS-AS, HSS is responsible for creating event exposure subscriptions whenever the IMS-AS is registered in HSS for the IMS identity, the HSS, such as the first IMS node 131, monitors the call related event(s). Step 1 is related to and may be combined with Action 801, and Step 2 is related to and may be combined with Actions 802 and 601.

**Step 3:** The HSS such as the first IMS node 131, checks whether there is an IMS-AS, e.g. MMTEL AS, such as the second IMS node 142 for the required call event type for the UE 120. In this case, the UE 120 has not yet registered in an IMS-AS, such as the second IMS node 142, or the UE 120 has not yet been assigned to the IMS-AS corresponding to the subscribed call event.

**Step 4:** The HSS, such as the first IMS node 131 keeps the subscription to the event e.g. locally, and provides an acknowledgement to the NEF, such as the CN node 131, that the event has been successfully subscribed in the HSS, e.g. in a **Nhss_imsEE Subscribe/Unsubscribe** response.

**Step 5:** NEF, such as the CN node 131, forwards the acknowledgement to the AF, such as the Network node 132, e.g. in a a **Nnef_imsEE Subscribe/Unsubscribe** response.

Steps 4 and 5 are related to and may be combined with Actions 605, 704, and 803

**Step 6** and **7a** and **b:** When the UE 120 registers in IMS or an IMS-AS, such as the second IMS node 142, associated to the subscribed call related event, is registered in the HSS, such as the first IMS node 131, then the HSS sends the subscription to the event to the IMS-AS, e.g. in a **Nimas_ism_EventExposure Subscribe/Unsubscribe** request which is responsed to in a **Nimas_ism_EventExposure Subscribe/Unsubscribe** response.

**Step 8a** and **b:** Finally, when the condition of the subscribed event is met, the IMS-AS, such as the second IMS node 142, notifies the NEF, such as the CN node 131, e.g. in a **Nimas_ism_EventExposure Notification,** which event notification is forwarded the to the AF, such as the Network node 132, e.g. in a **Nnef_ism_EE Notification.**

### Services for exposure of IMS Call Related Monitoring Capabilities using SBA

IMS-AS service and service operations for exposure of IMS Call Related Monitoring Capabilities.

The following 3GPP table 5.3.2-1 shows services exposed by an SBI capable IMS-AS, such as the second IMS node 142, for exposure of IMS Call Related Monitoring Capabilities.

| **Service** | **Service Operations** | **Operation Semantics** | **Example Consumer(s)** |
|---|---|---|---|
| imsEventExposure (_ImsEE) | Subscribe | Subscribe/Notify | HSS |
| | Unsubscribe | Subscribe/Notify | HSS |
| | Notification | Subscribe/Notify | HSS |
| | ModifySubscription | Subscribe/Notify | HSS |

3GPP Table 5.3.2-1: IMS Event Exposure Services provided by an SBI capable IMS-AS.

The below text relates to the services operations supported by the IMS AS for exposure of IMS call related monitoring capabilities:

### Nimsas imsEventExposure Subscribe service operation

**Service operation name:** Nimsas_imsEventExposure_Subscribe
**Description:** The NF consumer subscribes to receive an event.
**NF Consumers:** HSS.
**Required Inputs:** Target of Event Reporting: UE(s) ID, e.g. IMPU/MSISDN, Event filter containing the Event types, and Event Reporting options, e.g. one-time reporting, expiry time.
**Optional Inputs:** Notification filters, such as e.g. notify only when a UE such as the UE 120 becomes busy.
**Required Outputs:** Operation execution result indication. When the subscription is accepted: Subscription Correlation ID, Expiry time, required if the subscription can be expired based on the operator's policy.
Optional **Outputs:** First corresponding call related event report is included, if corresponding information is available.

### Nimsas imsEventExposure Unsubscribe service operation

**Service operation name:** Nimsas_imsEventExposure_Unsubscribe
**Description:** The consumer deletes the subscription of an event if already defined in IMS-AS.
**Required Inputs:** Subscription Correlation ID.
**Required Outputs:** Operation execution result indication.

### Nimsas_imsEventExposure_Notify service operation

**Service operation name:** Nimsas_imsEventExposure_Notify
**Description:** S-CSCF reports the call related event to the consumer that has previously subscribed.
**Required Inputs:** Event ID, Notification Correlation Information, time stamp.
**Optional Inputs:** Event specific parameters list, Event Removal Indication.
**Outputs, Required:** None.

### Nimsas imsEventExposure ModifySubscription service operation

**Service operation name:** Nimsas_imsEventExposure_ModifySubscription
**Description:** The NF consumer requests to modify an existing subscription to event notifications.
**NF Consumers:** HSS.
**Required Inputs:** Subscription Correlation ID, Modifications to the Event Subscription.

### Optional Inputs:

**Required Outputs:** Operation execution result indication.
**Optional Outputs:** None.

### Discovery and Selection of IMS-AS for exposure of IMS Call Related Monitoring Capabilities using SBA

IMS-AS, 3GPP TS 23.228 defines IMS-AS as an SBI capable entity but currently it only consumes services from HSS. Therefore, an IMS-AS, such as the second IMS node 142, may use the Nnrf_NFDiscovery service to discover HSS but it is not required to use the Nnrf_NFManagement service to register itself as producer of any service. According to embodiments herein, the IMS-AS, such as the second IMS node 142, may be able to use the Nnrf_NFManagement service to register its support for the new Nimsas_imsEE service. This means that NRF is assumed to support registration requests from IMS-AS as NF type. Accordingly, other NFs, e.g. the HSS, such as the first IMS node 131, may use the Nnrf_NFDiscovery service to obtain a complete NF profile of IMS-AS entities supporting the NimsAs_EventExposure service, or to discover the NF profile of the IMS AS currently serving the UE 120, see step 3a in figure 11.

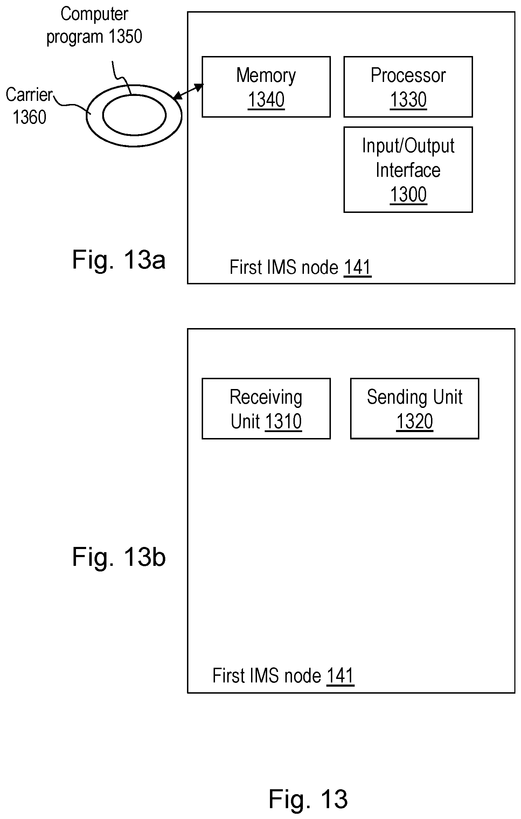

To perform the method actions above, the first IMS node 141 may comprise an arrangement depicted in **Figures 13a** **and b.** The first IMS node 141 is configured to handling a subscription of exposure of an IMS call related monitoring event in the communications network 100.

The first IMS node 141 may comprise an **input and output interface 1300** configured to communicate with CN nodes such as the CN node 131, network nodes such as the network node 132, and the second IMS node 142. The input and output interface 1200 may comprise a wireless receiver not shown, and a wireless transmitter not shown.

The first IMS node 141 is further configured to, e.g. by means of a **receiving unit 1310** in the first IMS node 141, receive a request via a second SBI Nxy from the CN node 131. The request is for a subscription to expose the IMS call related monitoring event for the UE 120 in the IMS network 102. The request is adapted to indicate a first ID identifying a type of the call related monitoring event, a second ID identifying the network node 132, from which the request is originating, a third ID identifying the UE 120, and a fourth ID identifying the CN node 131.

The first IMS node 141 is further configured to, e.g. by means of the **receiving unit 1310** in the first IMS node 141, when the UE 120 has been registered in the first IMS node 141, for an IMS identity, receive from the second IMS node 142 via a fourth SBI N71, a fifth ID identifying the second IMS node 142 selected to serve the UE 120 in an IMS network 102.

The first IMS node 141 is further configured to, e.g. by means of a **sending unit 1320** in the first IMS node 141, based on the fifth ID, send the subscription request to the second IMS node 142 via the fourth SBI N71, instructing the second IMS node 142 to setup the requested subscription.

The subscription when setup, is adapted to enable the second IMS node 142 to, when a call related event is detected that is related to the setup subscription, report the call related event according to any one out of:
- by direct reporting via a third SBI Nyy to the CN node 131 or
- by indirect reporting to the CN node 131 using the second SBI Nxy, via the first IMS, node 141, using the fourth SBI N71,
which call related event report will be forwarded by the CN node 131 via a first SBI Nxx to the network node 132.

The first IMS node 141 may further be configured to, e.g. by means of the **sending unit 1320** in the first IMS node 141, send to the CN node 131, via the second SBI Nxy, an acknowledgement that the requested subscription is setup. The acknowledgement is adapted to be forwarded to the network node 132. The acknowledgement is adapted to be sent when any one out of:
- before the UE 120 has been registered in the first IMS node 141, for the IMS identity,
- after the UE 120 has been registered in the first IMS node 141, for an IMS identity.

The first IMS node 141 may further be configured to, e.g. by means of the **sending unit 1320** in the first IMS node 141, if a report of a call related event is available, send it together with the acknowledgement.

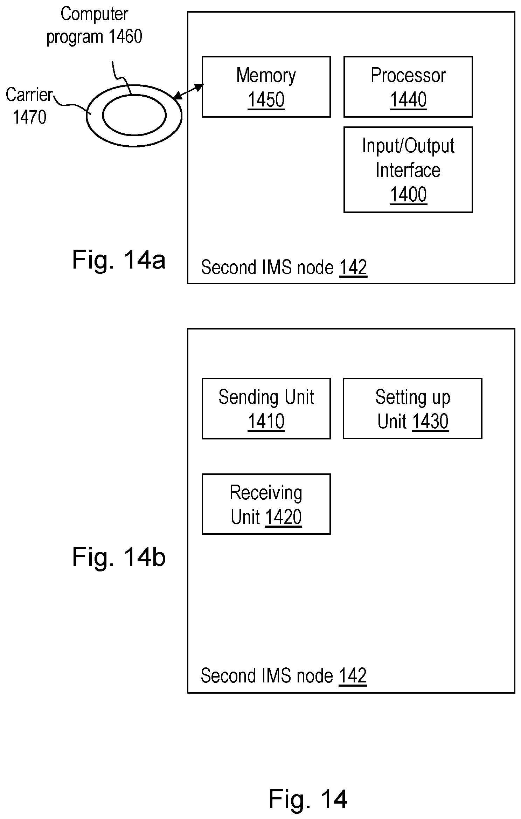

To perform the method actions above, the second IMS node 142 may comprise an arrangement depicted in **Figures 14a** **and b.** The second IMS node is configured to handle a subscription of exposure of an IMS call related monitoring event in the communications network 100.

The second IMS node 142 may comprise an **input and output interface 1400** configured to communicate with the network node 132, the CN node 131, and the first IMS node 141. The input and output interface may comprise a wireless receiver not shown, and a wireless transmitter not shown.

The second IMS node 142 is further configured to, e.g. by means of a **sending unit 1410** in the IMS node 130, send to the first IMS node 141, a fifth ID identifying the second IMS node 142 as being selected to serve the UE 120. The UE 120 is adapted to have been registered in the first IMS node 141, for an IMS identity.

The second IMS node 142 is further configured to, e.g. by means of a **receiving unit 1420** in the IMS node 130, receive from the first IMS node 141, via a fourth Service Based Interface, SBI, N71, a request to set up a subscription to expose the IMS call related monitoring event for the UE 120 in an IMS network 102. The request is adapted to indicate a first ID identifying a type of the call related monitoring event, a third ID identifying the UE 120, and a fourth ID identifying a Core Network CN node 131.

The second IMS node 142 is further configured to, e.g. by means of a **setting up unit 1430** in the IMS node 130, set up the requested subscription, enabling the second IMS node 142 to, when a call related event is detected that is related to the setup subscription, report the call related event according to any one out of:
- by direct reporting via a third SBI Nyy to the CN node 131 or
- by indirect reporting to the CN node 131 using the second SBI Nxy, via the first IMS, node 141, using the fourth SBI N71.

The call related event report is adapted to be forwarded by the CN node 131 via a first SBI Nxx to the network node 132.

The second IMS node 142 may further be configured to, e.g. by means of a **sending unit 1410** in the IMS node 130, send to the first IMS node 141 an acknowledgement that the requested subscription is setup. The acknowledgement is adapted to be forwarded to the CN node 131, via the via the second SBI Nxy to be further forwarded to the network node 132, via the first SBI Nxx.

The second IMS node 142 may further be configured to, e.g. by means of a **sending unit 1410** in the IMS node 130, , if a report of a call related event is available, send it together with the acknowledgement.

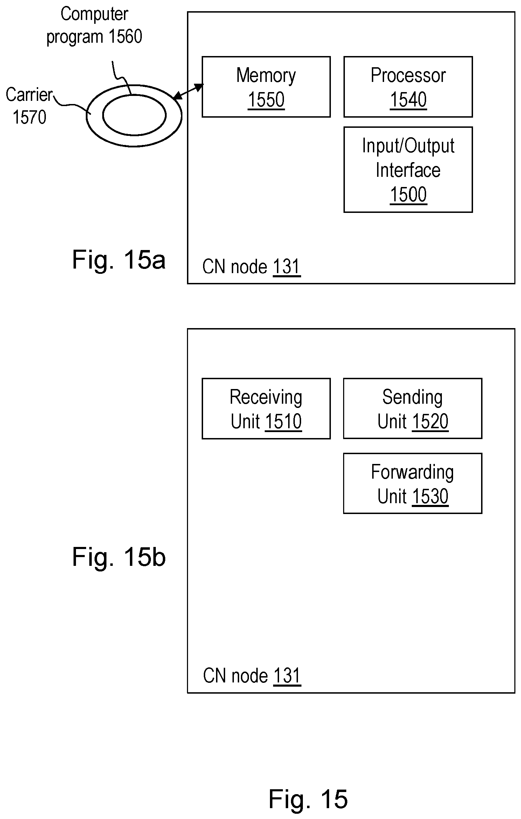

To perform the method actions above, the CN node 131 may comprise an arrangement depicted in **Figures 15a** **and b.** The CN node 131 is configured to handle a subscription of exposure of an Internet protocol Multimedia System, IMS, call related monitoring event in a communications network 100.

The CN node 131 may comprise an **input and output interface 1500** configured to communicate with nodes such as the network node 132, the first IMS node 141 and the second IMS node 142. The input and output interface may e.g. comprise a wireless receiver (not shown) and a wireless transmitter (not shown).

The CN node 131 is further configured to, e.g. by means of a **receiving unit 1510** in the CN node 131, receive from the network node 132, via a first SBI Nxx, a request for a subscription to expose the IMS call related monitoring event for the UE 120 in the IMS network 102. The request is adapted to indicate a first ID identifying a type of the call related monitoring event, a second ID identifying the network node 132, from which the request is originating, and a third ID identifying the UE 120.

The CN node 131 is further configured to, e.g. by means of a **sending unit 1520** in the CN node 131, send to the first IMS node 141, via a second SBI Nxy, the request and a fourth ID identifying the CN node 131.

The CN node 131 is further configured to, e.g. by means of a **forwarding unit 1530** in the CN node 131, forward to the network node 132, via the first SBI Nxx, an acknowledgement received from the first IMS node 141 via the via the second SBI Nxy, adapted to indicate that the requested subscription is setup.

The subscription when setup, is adapted to enable the second IMS node 142 to, when a call related event is detected that is related to the setup subscription, report the call related event according to any one out of:
- by direct reporting via a third SBI Nyy to the CN node 131 or
- by indirect reporting to the CN node 131 using the second SBI Nxy, via the first IMS, node 141, using the fourth SBI N71.

The call related event report is adapted to be forwarded by the CN node 131 via a first SBI Nxx to the network node 132.

The CN node 131 may further be configured to, e.g. by means of a **sending unit 1520** in the CN node 131, if a report of a call related event is available, send it together with the acknowledgement.

In some embodiments herein, e.g., related to the description of Figures 13-15 a and b, any one out of:
- The CN node 131 is adapted to be represented by a Network Exposure Function, NEF, node,
- the network node 132 is adapted to be represented by an Application Function, AF, node,
- the first IMS node 141 is adapted to be represented by a Home Subscriber Server, HSS, IMS node,
- the second IMS node 142 is adapted to be represented by a IMS-Application Server, AS,
- the UE 120 is adapted to comprise one or more UEs 120, 122 or a group of UEs, 120, 122
- the third ID identifying the first UE 120 is adapted to comprise a list of UEs identifying the respective UE 120 and: the one or more UEs 120, 122 or UEs in the group of UEs, and
- the call related event is adapted to comprise any one or more out of:
   the UE's session status
   the UE's call related events
   the UE's supplementary services interactions, and
   triggered supplementary services.

The embodiments herein may be implemented through a respective processor or one or more processors, such as a **processor 1330** of a processing circuitry in the first IMS node 141 depicted in Figure 13a, and a **processor 1440** of a processing circuitry in the second IMS node 142 depicted in Figure 14a, a **processor 1540** of a processing circuitry in the CN node 131 depicted in Figure 15a, together with respective computer program code for performing the functions and actions of the embodiments herein. The program code mentioned above may also be provided as a computer program product, for instance in the form of a data carrier carrying computer program code for performing the embodiments herein when being loaded into the respective UE 120 and RAN node 110. One such carrier may be in the form of a CD ROM disc. It is however feasible with other data carriers such as a memory stick. The computer program code may furthermore be provided as pure program code on a server and downloaded to the respective first IMS node 141, second IMS node 142 and CN node 131.

The first IMS node 141, the second IMS node 142 and the CN node 131, may further comprise respective **memories 1340, 1450, 1550,** comprising one or more memory units. The respective memories 1340, 1450, 1550, comprise instructions executable by the processor in the respective first IMS node 141, second IMS node 142 and CN node 131. The respective memories 1340, 1450, 1550 are arranged to be used to store e.g. information, indications, data, configurations, communication data, and applications to perform the methods herein when being executed in the respective first IMS node 141, second IMS node 142 and CN node 131.

In some embodiments, respective **computer programs 1350, 1460, 1560** comprise instructions, which when executed by the respective at least one processor 1330, 1440, 1540, cause the at least one processor of the respective first IMS node 141, second IMS node 142 and CN node 131 to perform the actions above.

In some embodiments, respective **carriers 1360, 1470, 1570** comprise the respective computer program 1350, 1460, 1560 wherein the respective carrier 1360, 1470, 1570 is one of an electronic signal, an optical signal, an electromagnetic signal, a magnetic signal, an electric signal, a radio signal, a microwave signal, or a computer-readable storage medium.

Those skilled in the art will appreciate that the units in the respective first IMS node 141, second IMS node 142 and CN node 131described above may refer to a combination of analog and digital circuits, and/or one or more processors configured with software and/or firmware, e.g. stored in the respective first IMS node 141, second IMS node 142 and CN node 131, that when executed by the respective one or more processors such as the processors described above. One or more of these processors, as well as the other digital hardware, may be included in a single Application-Specific Integrated Circuitry ASIC, or several processors and various digital hardware may be distributed among several separate components, whether individually packaged or assembled into a system-on-a-chip SoC.

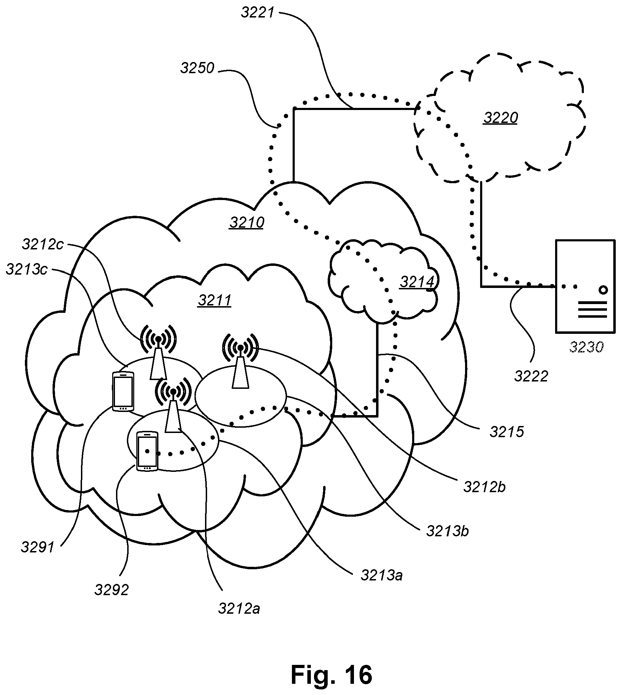

With reference to **Figure 16****,** in accordance with an embodiment, a communication system includes a telecommunication network 3210, such as a 3GPP-type cellular network, which comprises an access network 3211, such as a radio access network, and a core network 3214. The access network 3211 comprises a plurality of base stations 3212a, 3212b, 3212c, such as the RAN node 105, AP STAs NBs, eNBs, gNBs or other types of wireless access points, each defining a corresponding coverage area 3213a, 3213b, 3213c. Each base station 3212a, 3212b, 3212c is connectable to the core network 3214 over a wired or wireless connection 3215. A first user equipment (UE) such as the UE 120 and/or a Non-AP STA 3291 located in coverage area 3213c is configured to wirelessly connect to, or be paged by, the corresponding base station 3212c. A second UE 3292 such as the second UE 122 and/or a Non-AP STA in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

The communication system of Figure 16 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signaling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

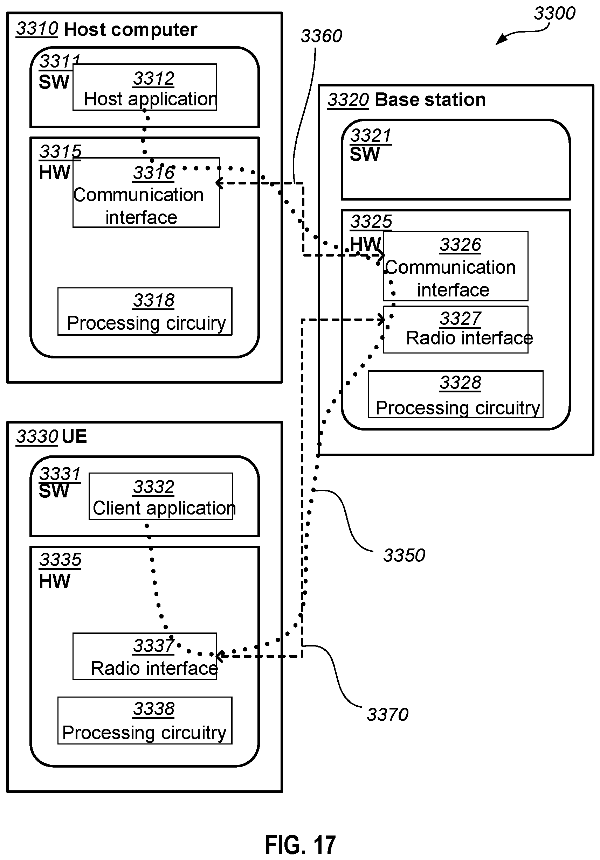

Example implementations, in accordance with an embodiment, of the UE, base station and host computer discussed in the preceding paragraphs will now be described with reference to **Figure 17****.** In a communication system 3300, a host computer 3310 comprises hardware 3315 including a communication interface 3316 configured to setup and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.

The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown in Figure 17) served by the base station 3320. The communication interface 3326 may be configured to facilitate a connection 3360 to the host computer 3310. The connection 3360 may be direct or it may pass through a core network (not shown in Figure 17) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.

The communication system 3300 further includes the UE 3330 already referred to. Its hardware 3335 may include a radio interface 3337 configured to setup and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides.

It is noted that the host computer 3310, base station 3320 and UE 3330 illustrated in Figure 17 may be identical to the host computer 3230, one of the base stations 3212a, 3212b, 3212c and one of the UEs 3291, 3292 of Figure 16, respectively. This is to say, the inner workings of these entities may be as shown in Figure 17 and independently, the surrounding network topology may be that of Figure 16.

In Figure 17, the OTT connection 3350 has been drawn abstractly to illustrate the communication between the host computer 3310 and the use equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may improve the [select the applicable **RAN** effect: data rate, latency, power consumption] and thereby provide benefits such as [select the applicable corresponding effect on the **OTT service:** reduced user waiting time, relaxed restriction on file size, better responsiveness, extended battery lifetime].

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signaling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

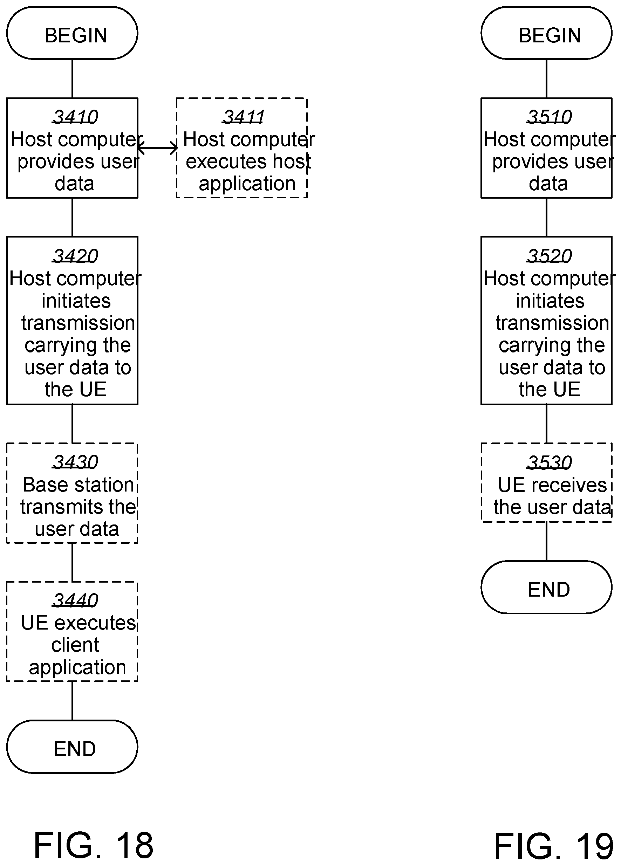

**Figure 18** is a flowchart illustrating a method implemented in a communication system, in accordance with one embodiment. The communication system includes a host computer, a base station such as a AP STA, and a UE such as a Non-AP STA which may be those described with reference to Figure 16 and Figure 17. For simplicity of the present disclosure, only drawing references to Figure 18 will be included in this section. In a first step 3410 of the method, the host computer provides user data. In an optional substep 3411 of the first step 3410, the host computer provides the user data by executing a host application. In a second step 3420, the host computer initiates a transmission carrying the user data to the UE. In an optional third step 3430, the base station transmits to the UE the user data which was carried in the transmission that the host computer initiated, in accordance with the teachings of the embodiments described throughout this disclosure. In an optional fourth step 3440, the UE executes a client application associated with the host application executed by the host computer.

**Figure 19** is a flowchart illustrating a method implemented in a communication system, in accordance with one embodiment. The communication system includes a host computer, a base station such as a AP STA, and a UE such as a Non-AP STA which may be those described with reference to Figure 16 and Figure 17. For simplicity of the present disclosure, only drawing references to Figure 19 will be included in this section. In a first step 3510 of the method, the host computer provides user data. In an optional substep (not shown) the host computer provides the user data by executing a host application. In a second step 3520, the host computer initiates a transmission carrying the user data to the UE. The transmission may pass via the base station, in accordance with the teachings of the embodiments described throughout this disclosure. In an optional third step 3530, the UE receives the user data carried in the transmission.

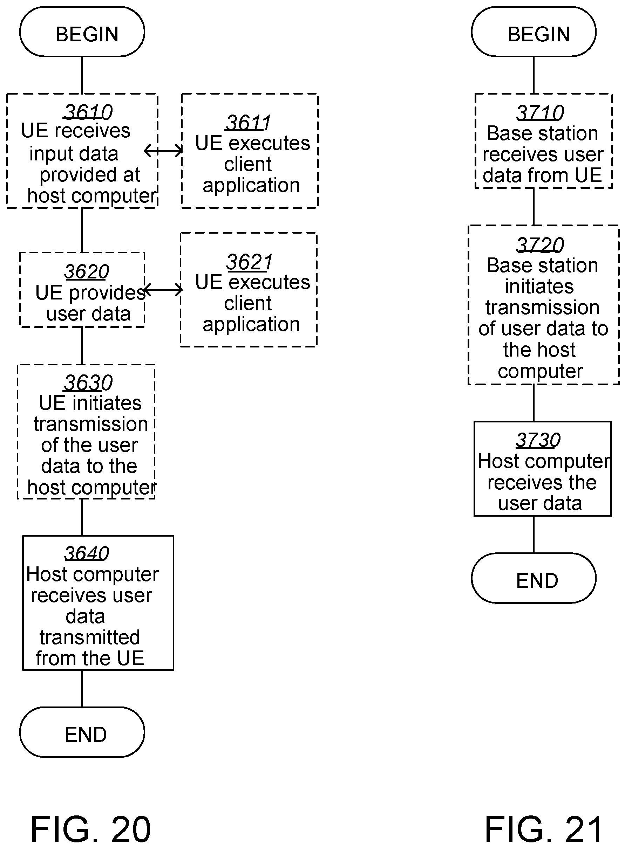

**Figure 20** is a flowchart illustrating a method implemented in a communication system, in accordance with one embodiment. The communication system includes a host computer, a base station such as a AP STA, and a UE such as a Non-AP STA which may be those described with reference to Figure 16 and Figure 17. For simplicity of the present disclosure, only drawing references to Figure 20 will be included in this section. In an optional first step 3610 of the method, the UE receives input data provided by the host computer. Additionally, or alternatively, in an optional second step 3620, the UE provides user data. In an optional substep 3621 of the second step 3620, the UE provides the user data by executing a client application. In a further optional substep 3611 of the first step 3610, the UE executes a client application which provides the user data in reaction to the received input data provided by the host computer. In providing the user data, the executed client application may further consider user input received from the user. Regardless of the specific manner in which the user data was provided, the UE initiates, in an optional third substep 3630, transmission of the user data to the host computer. In a fourth step 3640 of the method, the host computer receives the user data transmitted from the UE, in accordance with the teachings of the embodiments described throughout this disclosure.

**Figure 21** is a flowchart illustrating a method implemented in a communication system, in accordance with one embodiment. The communication system includes a host computer, a base station such as an AP STA, and a UE such as a Non-AP STA which may be those described with reference to Figure 16 and Figure 17. For simplicity of the present disclosure, only drawing references to Figure 21 will be included in this section. In an optional first step 3710 of the method, in accordance with the teachings of the embodiments described throughout this disclosure, the base station receives user data from the UE. In an optional second step 3720, the base station initiates transmission of the received user data to the host computer. In a third step 3730, the host computer receives the user data carried in the transmission initiated by the base station.

When using the word "comprise" or "comprising" it shall be interpreted as non-limiting, i.e. meaning "consist at least of".

## Claims

1. A method performed by a first Internet protocol Multimedia System, IMS, node (141), for handling a subscription of exposure of an IMS call related monitoring event in a communications network (100), the method comprising:
*receiving* (601) via a second Service Based Interface, SBI, (Nxy) from a Core Network, CN, node (131), a request for a subscription to expose the IMS call related monitoring event for a User Equipment, UE, (120) in an IMS network (102), which request indicates a first ID identifying a type of the call related monitoring event, a second ID identifying a network node (132), from which the request is originating, a third ID identifying the UE (120), and a fourth ID identifying the CN node (131),
when the UE (120) has been registered in the first IMS node (141), for an IMS identity, *receiving* (602) from a second IMS node (142) via a fourth SBI (N71), a fifth ID identifying the second IMS node (142) selected to serve the UE (120) in the IMS network (102),
based on the fifth ID, *sending* (603) the subscription request to the second IMS node (142) via fourth SBI (N71), instructing the second IMS node (142) to setup the requested subscription,
wherein the subscription when setup, enables the second IMS node (142) to, when a call related event is detected that is related to the setup subscription, report the call related event according to any one out of:
- by direct reporting via a third SBI (Nyy) to the CN node (131) or
- by indirect reporting to the CN node (131) using the second SBI (Nxy), via the first IMS, node (141), using the fourth SBI (N71),
which call related event report will be forwarded by the CN node (131) via a first SBI (Nxx) to the network node (132).

2. The method according to claim 1, further comprising:
*sending* (605) to the CN node (131), via the second SBI (Nxy), an acknowledgement, that the requested subscription is setup, which acknowledgement is to be forwarded to the network node (132), which acknowledgement is sent when any one out of:
- before the UE (120) has been registered in the first IMS node (141), for the IMS identity,
- after the UE (120) has been registered in the first IMS node (141), for an IMS identity,

3. The method according to claim 2, wherein, if a report of a call related event is available, sending it together with the acknowledgement.

4. The method according to any of the claims 1-3, wherein any one out of:
- the CN node (131) is represented by a Network Exposure Function, NEF node,
- the network node (132) is represented by an Application Function, AF node,
- the first IMS node (141) is represented by a Home Subscriber Server, HSS IMS node,
- the second IMS node (142) is represented by an IMS-Application Server, IMS-AS,
- the UE (120) comprises one or more UEs (120, 122) or a group of UEs, (120, 122)
- the third ID identifying the first UE (120) comprises a list of UEs identifying the respective UE (120) and: the one or more UEs (120, 122) or UEs in the group of UEs, and
- the call related event comprises any one or more out of:
the UE's session status
the UE's call related events
the UE's supplementary services interactions, and
triggered supplementary service.

5. A method performed by a second Internet protocol Multimedia System, IMS, node (142), for handling a subscription of exposure of an IMS call related monitoring event in a communications network (100), the method comprising:
*sending* (701) to a first IMS node (141), a fifth ID identifying the second IMS node (142) as being selected to serve the UE (120), which UE (120) has been registered in the first IMS node (141), for an IMS identity,
*receiving* (702) from the first IMS node (141), via a fourth Service Based Interface, SBI, (N71), a request to set up a subscription to expose the IMS call related monitoring event for the UE (120) in an IMS network (102), which request indicates a first ID identifying a type of the call related monitoring event, a third ID identifying the UE (120), and a fourth ID identifying a Core Network, CN, node (131),
*setting up* (703) the requested subscription, enabling the second IMS node (142) to, when a call related event is detected that is related to the setup subscription, report the call related event according to any one out of:
- by direct reporting via a third SBI (Nyy) to the CN node (131) or
- by indirect reporting to the CN node (131) using the second SBI (Nxy), via the first IMS, node (141), using the fourth SBI (N71),
which call related event report will be forwarded by the CN node (131) via a first SBI (Nxx) to the network node (132).

6. The method according to claim 5, further comprising:
*sending* (704) to the first IMS node (141) an acknowledgement that the requested subscription is setup, which acknowledgement is to be forwarded to the CN node (131), via the via the second SBI (Nxy) to be further forwarded to the network node (132), via the first SBI (Nxx).

7. The method according to any of the claims 5-6, wherein, if a report of a call related event is available, sending it together with the acknowledgement.

8. The method according to claim 7, wherein any one out of:
- the CN node (131) is represented by a Network Exposure Function, NEF, node,
- the network node (132) is represented by an Application Function, AF, node,
- the first IMS node (141) is represented by a Home Subscriber Server, HSS, IMS node,
- the second IMS node (142) is represented by a IMS-Application Server, IMS-AS,
- the UE (120) comprises one or more UEs or a group of UEs,
- the third ID identifying the first UE (120) comprises a list of UEs identifying the respective UE (120) and: the one or more UEs (120, 122) or UEs in the group of UEs, and
- the call related event comprises any one or more out of:
the UE's session status
the UE's call related events
the UE's supplementary services interactions, and
triggered supplementary service.

9. A method performed by a Core Network, CN, node (131), for handling a subscription of exposure of an Internet protocol Multimedia System, IMS, call related monitoring event in a communications network (100), the method comprising:
*receiving* (801) from a network node (132), via a first Service Based Interface, SBI, (Nxx), a request for a subscription to expose the IMS call related monitoring event for a User Equipment, UE, (120) in an IMS network (102), which request indicates a first ID identifying a type of the call related monitoring event, a second ID identifying the network node (132) from which the request is originating, and a third ID identifying the UE (120),
*sending* (802) to a first IMS node (141), via a second SBI (Nxy), the request and a fourth ID identifying the CN node (131),
*forwarding* (803) to the network node (132), via the first SBI (Nxx), an acknowledgement received from the first IMS node (141), via the second SBI (Nxy), indicating that the requested subscription is setup,
wherein the subscription when setup, enables a second IMS node (142) to, when a call related event is detected that is related to the setup subscription, report the call related event according to any one out of:
- by direct reporting via a third SBI (Nyy) to the CN node (131) or
- by indirect reporting to the CN node (131) using the second SBI (Nxy), via the first IMS, node (141), using the fourth SBI (N71),
which call related event report will be forwarded by the CN node (131) via a first SBI (Nxx) to the network node (132).

10. The method according to claim 9, wherein, if a report of a call related event is available, sending it together with the acknowledgement.

11. The method according to any of the claims 9-10, wherein any one out of:
- the CN node (131) is represented by a Network Exposure Function, NEF, node,
- the network node (132) is represented by an Application Function, AF, node,
- the first IMS node (141) is represented by a Home Subscriber Server, HSS, IMS node,
- the second IMS node (142) is represented by a IMS-Application Server, IMS-AS,
- the UE (120) comprises one or more UEs or a group of UEs, and
- the call related event comprises any one or more out of:
the UE's session status
the UE's call events
the UE's supplementary services interactions,
the third ID identifying the first UE (120) comprises a list of UEs identifying the respective UE (120) and: the one or more UEs (120, 122) or UEs in the group of UEs, and
triggered supplementary service.

12. A first Internet protocol Multimedia System, IMS, node (141), configured to handling a subscription of exposure of an IMS call related monitoring event in a communications network (100), the first IMS node (141) further being configured to:
*receive* via a second Service Based Interface, SBI, (Nxy) from a Core Network, CN, node (131), a request for a subscription to expose the IMS call related monitoring event for a User Equipment, UE, (120) in an IMS network (102), which request is adapted to indicate a first ID identifying a type of the call related monitoring event, a second ID identifying a network node (132), from which the request is originating, a third ID identifying the UE (120), and a fourth ID identifying the CN node (131),
when the UE (120) has been registered in the first IMS node (141), for an IMS identity, *receive* from a second IMS node (142) via a fourth SBI (N71), a fifth ID identifying the second IMS node (142) selected to serve the UE (120) in the IMS network (102),
based on the fifth ID, *send* the subscription request to the second IMS node (142), via a fourth SBI (N71), Instructing the second IMS node (142) to setup the requested subscription,
wherein the subscription when setup, is adapted to enable the second IMS node (142) to, when a call related event is detected that is related to the setup subscription, report the call related event according to any one out of:
- by direct reporting via a third SBI (Nyy) to the CN node (131) or
- by indirect reporting to the CN node (131) using the second SBI (Nxy), via the first IMS, node (141), using the fourth SBI (N71),
which call related event report will be forwarded by the CN node (131) via a first SBI (Nxx) to the network node (132).

13. The first IMS node (141) according to claim 12, further being configured to:
*send* to the CN node (131), via the second SBI (Nxy), an acknowledgement that the requested subscription is setup, which acknowledgement is adapted to be forwarded to the network node (132), which acknowledgement is adapted to be sent when any one out of:
- before the UE (120) has been registered in the first IMS node (141), for the IMS identity,
- after the UE (120) has been registered in the first IMS node (141), for an IMS identity.

14. A second Internet protocol Multimedia System, IMS, node (142), configured to handle a subscription of exposure of an IMS call related monitoring event in a communications network (100), the second IMS node (142) further being configured to:
*send* to a first IMS node (141), a fifth ID identifying the second IMS node (142) as being selected to serve the UE (120), which UE (120) is adapted to have been registered in the first IMS node (141), for an IMS identity,
*receive* from the first IMS node (141), via a fourth Service Based Interface, SBI, (N71), a request to set up a subscription to expose the IMS call related monitoring event for the UE (120) in an IMS network (102), which request is adapted to indicate a first ID identifying a type of the call related monitoring event, a third ID identifying the UE (120), and a fourth ID identifying a Core Network CN node (131),
*set up* the requested subscription, enabling the second IMS node (142) to, when a call related event is detected that is related to the setup subscription, report the call related event according to any one out of:
- by direct reporting via a third SBI (Nyy) to the CN node (131) or
- by indirect reporting to the CN node (131) using the second SBI (Nxy), via the first IMS, node (141), using the fourth SBI (N71),
which call related event report is adapted to be forwarded by the CN node (131) via a first SBI (Nxx) to the network node (132).

15. A Core Network, CN, node (131), configured to handle a subscription of exposure of an Internet protocol Multimedia System, IMS, call related monitoring event in a communications network (100), the CN node (131) further being configured to:
*receive* from a network node (132), via a first Service Based Interface, SBI, (Nxx), a request for a subscription to expose the IMS call related monitoring event for a User Equipment, UE, (120) in an IMS network (102), which request is adapted to indicate a first ID identifying a type of the call related monitoring event, a second ID identifying a network node (132) from which the request is originating, and a third ID identifying the UE (120),
*send* to a first IMS node (141), via a second SBI (Nxy), the request and a fourth ID identifying the CN node (131),
*forward* to the network node (132), via the first SBI (Nxx), an acknowledgement received from the first IMS node (141), via the via the second SBI (Nxy), adapted to indicate that the requested subscription is setup,
wherein the subscription when setup, is adapted to enable the second IMS node (142) to, when a call related event is detected that is related to the setup subscription, report the call related event according to any one out of:
- by direct reporting via a third SBI (Nyy) to the CN node (131) or
- by indirect reporting to the CN node (131) using the second SBI (Nxy), via the first IMS, node (141), using the fourth SBI (N71),
which call related event report is adapted to be forwarded by the CN node (131) via a first SBI (Nxx) to the network node (132).

## Patentansprüche

1. Verfahren, das von einem ersten Internetprotokoll-Multimedia-System-Knoten, IMS-Knoten, (141) durchgeführt wird, zur Handhabung eines Abonnements zur Darlegung eines IMS-Ruf-bezogenen Überwachungsereignisses in einem Kommunikationsnetzwerk (100), wobei das Verfahren Folgendes umfasst:
Empfangen (601) einer Anforderung für ein Abonnement zum Darlegen des IMS-Ruf-bezogenen Überwachungsereignisses für eine Benutzereinrichtung, UE, (120) in einem IMS-Netzwerk (102) über eine zweite dienstbasierte Schnittstelle, SBI, (Nxy) von einem Kernnetzwerkknoten, CN-Knoten, (131), wobei die Anforderung eine erste ID, die eine Art des rufbezogenen Überwachungsereignisses identifiziert, eine zweite ID, die einen Netzwerkknoten (132) identifiziert, von dem die Anforderung abgeht, eine dritte ID, die die UE (120) identifiziert, und eine vierte ID angibt, die den CN-Knoten (131) identifiziert,
wenn die UE (120) in dem ersten IMS-Knoten (141) für eine IMS-Identität registriert wurde, Empfangen (602) einer fünften ID, die einen zweiten IMS-Knoten (142) identifiziert, der ausgewählt wurde, um die UE (120) in dem IMS-Netzwerk (102) zu bedienen, von dem zweiten IMS-Knoten (142) über eine vierte SBI (N71),
basierend auf der fünften ID Senden (603) der Abonnementanforderung über die vierte SBI (N71) an den zweiten IMS-Knoten (142), die den zweiten IMS-Knoten (142) anweist, das angeforderte Abonnement zu einzurichten,
wobei das Abonnement nach seiner Einrichtung dem zweiten IMS-Knoten (142) ermöglicht, bei Erkennung eines rufbezogenen Ereignisses, das mit dem eingerichteten Abonnement in Beziehung steht, das rufbezogene Ereignis gemäß einem von Folgendem zu melden:
- durch direktes Melden an den CN-Knoten (131) über eine dritte SBI (Nyy) oder
- durch indirektes Melden an den CN-Knoten (131) unter Verwendung der zweiten SBI (Nxy) über den ersten IMS-Knoten (141) unter Verwendung der vierten SBI (N71),
wobei die Meldung des rufbezogenen Ereignisses von dem CN-Knoten (131) über eine erste SBI (Nxx) an den Netzwerkknoten (132) weitergeleitet wird.

2. Verfahren nach Anspruch 1, ferner umfassend:
Senden (605) einer Bestätigung, dass das angeforderte Abonnement eingerichtet ist, über die zweite SBI (Nxy) an den CN-Knoten (131), wobei die Bestätigung an den Netzwerkknoten (132) weitergeleitet werden soll, wobei die Bestätigung in einem der folgenden Fälle gesendet wird:
- bevor die UE (120) in dem ersten IMS-Knoten (141) für die IMS-Identität registriert wurde,
- nachdem die UE (120) in dem ersten IMS-Knoten (141) für eine IMS-Identität registriert wurde.

3. Verfahren nach Anspruch 2, wobei, falls eine Meldung eines rufbezogenen Ereignisses verfügbar ist, diese zusammen mit der Bestätigung gesendet wird.

4. Verfahren nach einem der Ansprüche 1-3, wobei eines von Folgendem zutrifft:
- der CN-Knoten (131) wird durch einen Knoten mit Netzwerkdarlegungsfunktion, NEF, dargestellt,
- der Netzwerk-Knoten (132) wird durch einen Knoten mit Anwendungsfunktion, AF, dargestellt,
- der erste IMS-Knoten (141) wird durch einen Heimat-Teilnehmerserver-IMS-Knoten, HSS-IMS-Knoten, dargestellt,
- der zweite IMS-Knoten (142) wird durch einen IMS-Anwendungsserver, IMS-AS, dargestellt,
- die UE (120) umfasst eine oder mehrere UEs (120, 122) oder eine Gruppe von UEs (120, 122),
- die dritte ID, die die erste UE (120) identifiziert, umfasst eine Liste von UEs, die die jeweilige UE (120) und die eine oder die mehreren anderen UEs (120, 122) oder UEs in der Gruppe von UEs identifiziert, und
- das rufbezogene Ereignis umfasst eines oder mehrere von Folgenden:
den Sitzungsstatus der UE,
die rufbezogenen Ereignisse der UE,
die Interaktionen der UE mit Zusatzdiensten und
einen ausgelösten Zusatzdienst.

5. Verfahren, das von einem zweiten Internetprotokoll-Multimedia-System-Knoten, IMS-Knoten, (142) durchgeführt wird, zur Handhabung eines Abonnements zur Darlegung eines IMS-Ruf-bezogenen Überwachungsereignisses in einem Kommunikationsnetzwerk (100), wobei das Verfahren Folgendes umfasst:
Senden (701) einer fünften ID, die den zweiten IMS-Knoten (142) als zum Bedienen der UE (120) ausgewählt identifiziert, an einen ersten IMS-Knoten (141), wobei die UE (120) in dem ersten IMS-Knoten (141) für eine IMS-Identität registriert wurde,
Empfangen (702) einer Anforderung zum Einrichten eines Abonnements zum Darlegen des IMS-Ruf-bezogenen Überwachungsereignisses für die UE (120) in einem IMS-Netzwerk (102) von dem ersten IMS-Knoten (141) über eine vierte dienstbasierte Schnittstelle, SBI, (N71), wobei die Anforderung eine erste ID, die eine Art des rufbezogenen Überwachungsereignisses identifiziert, eine dritte ID, die die UE (120) identifiziert, und eine vierte ID angibt, die einen Kernnetzwerkknoten, CN-Knoten, (131) identifiziert,
Einrichten (703) des angeforderten Abonnements, wodurch dem zweiten IMS-Knoten (142) ermöglicht wird, bei Erkennung eines rufbezogenen Ereignisses, das mit dem eingerichteten Abonnement in Beziehung steht, das rufbezogene Ereignis gemäß einem von Folgendem zu melden:
- durch direktes Melden an den CN-Knoten (131) über eine dritte SBI (Nyy) oder
- durch indirektes Melden an den CN-Knoten (131) unter Verwendung der zweiten SBI (Nxy) über den ersten IMS-Knoten (141) unter Verwendung der vierten SBI (N71),
wobei die Meldung des rufbezogenen Ereignisses von dem CN-Knoten (131) über eine erste SBI (Nxx) an den Netzwerkknoten (132) weitergeleitet wird.

6. Verfahren nach Anspruch 5, ferner umfassend:
Senden (704) einer Bestätigung, dass das angeforderte Abonnement eingerichtet ist, an den ersten IMS-Knoten (141), wobei die Bestätigung über die zweite SBI (Nxy) an den CN-Knoten (131) weitergeleitet wird, um über die erste SBI (Nxx) weiter an den Netzwerkknoten (132) weitergeleitet zu werden.

7. Verfahren nach einem der Ansprüche 5-6, wobei, falls eine Meldung eines rufbezogenen Ereignisses verfügbar ist, diese zusammen mit der Bestätigung gesendet wird.

8. Verfahren nach Anspruch 7, wobei eines oder mehreres von Folgendem zutrifft:
- der CN-Knoten (131) wird durch einen Knoten mit Netzwerkdarlegungsfunktion, NEF, dargestellt,
- der Netzwerk-Knoten (132) wird durch einen Knoten mit Anwendungsfunktion, AF, dargestellt,
- der erste IMS-Knoten (141) wird durch einen Heimat-Teilnehmerserver-IMS-Knoten, HSS-IMS-Knoten, dargestellt,
- der zweite IMS-Knoten (142) wird durch einen IMS-Anwendungsserver, IMS-AS, dargestellt,
- die UE (120) umfasst eine oder mehrere UEs oder eine Gruppe von UEs,
- die dritte ID, die die erste UE (120) identifiziert, umfasst eine Liste von UEs, die die jeweilige UE (120) und die eine oder die mehreren anderen UEs (120, 122) oder UEs in der Gruppe von UEs identifiziert, und
- das rufbezogene Ereignis umfasst eines oder mehrere von Folgenden:
den Sitzungsstatus der UE,
die rufbezogenen Ereignisse der UE,
die Interaktionen der UE mit Zusatzdiensten und
einen ausgelösten Zusatzdienst.

9. Verfahren, das von einem Kernnetzwerkknoten, CN-Knoten, (131) durchgeführt wird, zur Handhabung eines Abonnements zur Darlegung eines Internetprotokoll-Multimedia-System-Ruf-bezogenen, IMS-Ruf-bezogenen, Überwachungsereignisses in einem Kommunikationsnetzwerk (100), wobei das Verfahren Folgendes umfasst:
Empfangen (801) einer Anforderung für ein Abonnement zum Darlegen des IMS-Ruf-bezogenen Überwachungsereignisses für eine Benutzereinrichtung, UE, (120) in einem IMS-Netzwerk (102) über eine erste dienstbasierte Schnittstelle, SBI, (Nxx) von einem Netzwerkknoten (132), wobei die Anforderung eine erste ID, die eine Art des rufbezogenen Überwachungsereignisses identifiziert, eine zweite ID, die den Netzwerkknoten (132) identifiziert, von dem die Anforderung abgeht, und eine dritte ID, die die UE (120) identifiziert,
Senden (802) der Anforderung und einer vierten ID, die den CN-Knoten (131) identifiziert, über eine zweite SIB (Nxy) an einen ersten IMS-Knoten (141),
Weiterleiten (803) einer Bestätigung, die von dem ersten IMS-Knoten (141) über die zweite SBI (Nxy) empfangen wird und angibt, dass das angeforderte Abonnement eingerichtet ist, über die erste SBI (Nxx) an den Netzwerkknoten (132),
wobei das Abonnement nach seiner Einrichtung einem zweiten IMS-Knoten (142) ermöglicht, bei Erkennung eines rufbezogenen Ereignisses, das mit dem eingerichteten Abonnement in Beziehung steht, das rufbezogene Ereignis gemäß einem von Folgendem zu melden:
- durch direktes Melden an den CN-Knoten (131) über eine dritte SBI (Nyy) oder
- durch indirektes Melden an den CN-Knoten (131) unter Verwendung der zweiten SBI (Nxy) über den ersten IMS-Knoten (141) unter Verwendung der vierten SBI (N71),
wobei die Meldung des rufbezogenen Ereignisses von dem CN-Knoten (131) über eine erste SBI (Nxx) an den Netzwerkknoten (132) weitergeleitet wird.

10. Verfahren nach Anspruch 9, wobei, falls eine Meldung eines rufbezogenen Ereignisses verfügbar ist, diese zusammen mit der Bestätigung gesendet wird.

11. Verfahren nach einem der Ansprüche 9-10, wobei eines von Folgendem zutrifft:
- der CN-Knoten (131) wird durch einen Knoten mit Netzwerkdarlegungsfunktion, NEF, dargestellt,
- der Netzwerk-Knoten (132) wird durch einen Knoten mit Anwendungsfunktion, AF, dargestellt,
- der erste IMS-Knoten (141) wird durch einen Heimat-Teilnehmerserver-IMS-Knoten, HSS-IMS-Knoten, dargestellt,
- der zweite IMS-Knoten (142) wird durch einen IMS-Anwendungsserver, IMS-AS, dargestellt,
- die UE (120) umfasst eine oder mehrere UEs oder eine Gruppe von UEs, und
- das rufbezogene Ereignis umfasst eines oder mehrere von Folgenden:
den Sitzungsstatus der UE,
die Rufereignisse der UE,
die Interaktionen der UE mit Zusatzdiensten,
die dritte ID, die die erste UE (120) identifiziert, umfasst eine Liste von UEs, die die jeweilige UE (120) und die eine oder die mehreren anderen UEs (120, 122) oder UEs in der Gruppe von UEs identifiziert, und
einen ausgelösten Zusatzdienst.

12. Erster Internetprotokoll-Multimedia-System-Knoten, IMS-Knoten, (141), der zum Handhaben eines Abonnements zur Darlegung eines IMS-Ruf-bezogenen Überwachungsereignisses in einem Kommunikationsnetzwerk (100) konfiguriert ist, wobei der erste IMS-Knoten (141) ferner zu Folgendem konfiguriert ist:
Empfangen einer Anforderung für ein Abonnement zum Darlegen des IMS-Ruf-bezogenen Überwachungsereignisses für eine Benutzereinrichtung, UE, (120) in einem IMS-Netzwerk (102) über eine zweite dienstbasierte Schnittstelle, SBI, (Nxy) von einem Kernnetzwerkknoten, CN-Knoten, (131), wobei die Anforderung so ausgelegt ist, dass sie eine erste ID, die eine Art des rufbezogenen Überwachungsereignisses identifiziert, eine zweite ID, die einen Netzwerkknoten (132) identifiziert, von dem die Anforderung abgeht, eine dritte ID, die die UE (120) identifiziert, und eine vierte ID angibt, die den CN-Knoten (131) identifiziert,
wenn die UE (120) in dem ersten IMS-Knoten (141) für eine IMS-Identität registriert wurde, Empfangen einer fünften ID, die einen zweiten IMS-Knoten (142) identifiziert, der ausgewählt wurde, um die UE (120) in dem IMS-Netzwerk (102) zu bedienen, von dem zweiten IMS-Knoten (142) über eine vierte SBI (N71),
basierend auf der fünften ID Senden der Abonnementanforderung über die vierte SBI (N71) an den zweiten IMS-Knoten (142), die den zweiten IMS-Knoten (142) anweist, das angeforderte Abonnement zu einzurichten,
wobei das Abonnement so ausgelegt ist, dass es nach seiner Einrichtung dem zweiten IMS-Knoten (142) ermöglicht, bei Erkennung eines rufbezogenen Ereignisses, das mit dem eingerichteten Abonnement in Beziehung steht, das rufbezogene Ereignis gemäß einem von Folgendem zu melden:
- durch direktes Melden an den CN-Knoten (131) über eine dritte SBI (Nyy) oder
- durch indirektes Melden an den CN-Knoten (131) unter Verwendung der zweiten SBI (Nxy) über den ersten IMS-Knoten (141) unter Verwendung der vierten SBI (N71),
wobei die Meldung des rufbezogenen Ereignisses von dem CN-Knoten (131) über eine erste SBI (Nxx) an den Netzwerkknoten (132) weitergeleitet wird.

13. Erster IMS-Knoten (141) nach Anspruch 12, der ferner zu Folgendem konfiguriert ist:
Senden einer Bestätigung, dass das angeforderte Abonnement eingerichtet ist, über die zweite SBI (Nxy) an den CN-Knoten (131), wobei die Bestätigung so ausgelegt ist, dass sie an den Netzwerkknoten (132) weitergeleitet werden soll, wobei die Bestätigung so ausgelegt ist, dass sie in einem der folgenden Fälle gesendet wird:
- bevor die UE (120) in dem ersten IMS-Knoten (141) für die IMS-Identität registriert wurde,
- nachdem die UE (120) in dem ersten IMS-Knoten (141) für eine IMS-Identität registriert wurde.

14. Zweiter Internetprotokoll-Multimedia-System-Knoten, IMS-Knoten, (142), der zum Handhaben eines Abonnements zur Darlegung eines IMS-Ruf-bezogenen Überwachungsereignisses in einem Kommunikationsnetzwerk (100) konfiguriert ist, wobei der zweite IMS-Knoten (142) ferner zu Folgendem konfiguriert ist:
Senden einer fünften ID, die den zweiten IMS-Knoten (142) als zum Bedienen der UE (120) ausgewählt identifiziert, an einen ersten IMS-Knoten (141), wobei die UE (120) so ausgelegt ist, dass sie in dem ersten IMS-Knoten (141) für eine IMS-Identität registriert wurde,
Empfangen einer Anforderung zum Einrichten eines Abonnements zum Darlegen des IMS-Ruf-bezogenen Überwachungsereignisses für die UE (120) in einem IMS-Netzwerk (102) von dem ersten IMS-Knoten (141) über eine vierte dienstbasierte Schnittstelle, SBI, (N71), wobei die Anforderung so ausgelegt ist, dass sie eine erste ID, die eine Art des rufbezogenen Überwachungsereignisses identifiziert, eine dritte ID, die die UE (120) identifiziert, und eine vierte ID angibt, die einen Kernnetzwerkknoten, CN-Knoten, (131) identifiziert,
Einrichten des angeforderten Abonnements, wodurch dem zweiten IMS-Knoten (142) ermöglicht wird, bei Erkennung eines rufbezogenen Ereignisses, das mit dem eingerichteten Abonnement in Beziehung steht, das rufbezogene Ereignis gemäß einem von Folgendem zu melden:
- durch direktes Melden an den CN-Knoten (131) über eine dritte SBI (Nyy) oder
- durch indirektes Melden an den CN-Knoten (131) unter Verwendung der zweiten SBI (Nxy) über den ersten IMS-Knoten (141) unter Verwendung der vierten SBI (N71),
wobei die Meldung des rufbezogenen Ereignisses so ausgelegt ist, dass sie von dem CN-Knoten (131) über eine erste SBI (Nxx) an den Netzwerkknoten (132) weitergeleitet wird.

15. Kernnetzwerkknoten, CN-Knoten, (131), der zum Handhaben eines Abonnements zur Darlegung eines Internetprotokoll-Multimedia-System-Ruf-bezogenen, IMS-Ruf-bezogenen, Überwachungsereignisses in einem Kommunikationsnetzwerk (100) konfiguriert ist, wobei der CN-Knoten (131) ferner zu Folgendem konfiguriert ist:
Empfangen einer Anforderung für ein Abonnement zum Darlegen des IMS-Ruf-bezogenen Überwachungsereignisses für eine Benutzereinrichtung, UE, (120) in einem IMS-Netzwerk (102) über eine erste dienstbasierte Schnittstelle, SBI, (Nxx) von einem Netzwerkknoten (132), wobei die Anforderung so ausgelegt ist, dass sie eine erste ID, die eine Art des rufbezogenen Überwachungsereignisses identifiziert, eine zweite ID, die einen Netzwerkknoten (132) identifiziert, von dem die Anforderung abgeht, und eine dritte ID, die die UE (120) identifiziert,
Senden der Anforderung und einer vierten ID, die den CN-Knoten (131) identifiziert, über eine zweite SIB (Nxy) an einen ersten IMS-Knoten (141),
Weiterleiten einer Bestätigung, die von dem ersten IMS-Knoten (141) über die zweite SBI (Nxy) empfangen wird und die so ausgelegt ist, dass sie angibt, dass das angeforderte Abonnement eingerichtet ist, über die erste SBI (Nxx) an den Netzwerkknoten (132),
wobei das Abonnement so ausgelegt ist, dass es nach seiner Einrichtung dem zweiten IMS-Knoten (142) ermöglicht, bei Erkennung eines rufbezogenen Ereignisses, das mit dem eingerichteten Abonnement in Beziehung steht, das rufbezogene Ereignis gemäß einem von Folgendem zu melden:
- durch direktes Melden an den CN-Knoten (131) über eine dritte SBI (Nyy) oder
- durch indirektes Melden an den CN-Knoten (131) unter Verwendung der zweiten SBI (Nxy) über den ersten IMS-Knoten (141) unter Verwendung der vierten SBI (N71),
wobei die Meldung des rufbezogenen Ereignisses so ausgelegt ist, dass sie von dem CN-Knoten (131) über eine erste SBI (Nxx) an den Netzwerkknoten (132) weitergeleitet wird.

## Revendications

1. Procédé réalisé par un premier nœud de système multimédia de protocole Internet, IMS, (141), pour gérer un abonnement d'exposition d'un événement de surveillance lié à un appel IMS dans un réseau de communication (100), le procédé comprenant :
*la réception* (601), via une deuxième interface basée sur service, SBI, (Nxy) depuis un nœud de réseau central, CN, (131), d'une demande d'un abonnement pour exposer l'événement de surveillance lié à un appel IMS pour un équipement utilisateur, UE, (120) dans un réseau IMS (102), laquelle demande indique un premier identifiant qui identifie un type de l'événement de surveillance lié à un appel, un deuxième identifiant qui identifie un nœud de réseau (132) duquel provient la demande, un troisième identifiant qui identifie l'UE (120), et un quatrième identifiant qui identifie le nœud CN (131),
lorsque l'UE (120) a été enregistré dans le premier nœud IMS (141), pour une identité IMS, *la réception* (602), depuis un deuxième nœud IMS (142), via une quatrième SBI (N71), d'un cinquième identifiant qui identifie le deuxième nœud IMS (142) sélectionné pour desservir l'UE (120) dans le réseau IMS (102),
sur la base du cinquième identifiant, *l'envoi* (603) de la demande d'abonnement au deuxième nœud IMS (142) via une quatrième SBI (N71), instruisant au deuxième nœud IMS (142) de configurer l'abonnement demandé,
dans lequel l'abonnement, lorsqu'il est configuré, permet au deuxième nœud IMS (142) de, lorsqu'il est détecté un événement lié à un appel qui est lié à l'abonnement configuré, signaler l'événement lié à un appel par l'un quelconque parmi :
- un signalement direct via une troisième SBI (Nyy) au nœud CN (131), ou
- un signalement indirect au nœud CN (131) utilisant la deuxième SBI (Nxy), via le premier nœud IMS (141) utilisant la quatrième SBI (N71),
le signalement d'événement lié à un appel étant transmis par le nœud CN (131) via une première SBI (Nxx) au nœud de réseau (132).

2. Procédé selon la revendication 1, comprenant en outre :
*l'envoi* (605), au nœud CN (131), via la deuxième SBI (Nxy), d'un acquittement que l'abonnement demandé est configuré, l'acquittement devant être transmis au nœud de réseau (132), l'acquittement étant envoyé dans l'un des cas suivants :
- avant que l'UE (120) ne soit enregistré dans le premier nœud IMS (141) pour l'identité IMS,
- après que l'UE (120) a été enregistré dans le premier nœud IMS (141) pour une identité IMS.

3. Procédé selon la revendication 2, dans lequel, si un signalement d'un événement lié à un appel est disponible, l'envoi de celui-ci avec l'acquittement.

4. Procédé selon l'une quelconque des revendications 1 à 3, dans lequel l'un quelconque des cas suivants existe :
- le nœud CN (131) est représenté par un nœud de fonction d'exposition de réseau, NEF,
- le nœud de réseau (132) est représenté par un nœud de fonction d'application, AF,
- le premier nœud IMS (141) est représenté par un nœud IMS de serveur d'abonné de rattachement, HSS,
- le deuxième nœud IMS (142) est représenté par un serveur d'applications IMS, IMS-AS,
- l'UE (120) comprend un ou plusieurs UE (120, 122) ou un groupe d'UE (120, 122),
- le troisième identifiant qui identifie le premier UE (120) comprend une liste d'UE identifiant l'UE (120) respectif et : les un ou plusieurs UE (120, 122) ou les UE dans le groupe d'UE, et
- l'événement lié à un appel comprend l'un quelconque parmi :
un état de session de l'UE,
des événements liés à un appel de l'UE,
des interactions de services supplémentaires de l'UE, et
un service supplémentaire déclenché.

5. Procédé réalisé par un deuxième nœud de système multimédia de protocole Internet, IMS, (142), pour gérer un abonnement d'exposition d'un événement de surveillance lié à un appel IMS dans un réseau de communication (100), le procédé comprenant :
*l'envoi* (701), à un premier nœud IMS (141), d'un cinquième identifiant qui identifie le deuxième nœud IMS (142) comme étant sélectionné pour desservir l'UE (120), l'UE (120) ayant été enregistré dans le premier nœud IMS (141), pour une identité d'IMS,
*la réception* (702), depuis le premier nœud IMS (141), via une quatrième interface basée sur service, SBI, (N71), d'une demande de configuration d'un abonnement pour exposer l'événement de surveillance lié à un appel IMS pour l'UE (120) dans un réseau IMS (102), laquelle demande indique un premier identifiant qui identifie un type de l'événement de surveillance lié à un appel, un troisième identifiant qui identifie l'UE (120), et un quatrième identifiant qui identifie un nœud de réseau central, CN, (131),
*la configuration* (703) de l'abonnement demandé, en permettant au deuxième nœud IMS (142) de, lorsqu'il est détecté un événement lié à un appel qui est lié à l'abonnement configuré, signaler l'événement lié à un appel par l'un quelconque parmi :
- un signalement direct via une troisième SBI (Nyy) au nœud CN (131), ou
- un signalement indirect au nœud CN (131) utilisant la deuxième SBI (Nxy), via le premier nœud IMS (141) utilisant la quatrième SBI (N71),
le signalement d'événement lié à un appel étant transmis par le nœud CN (131) via une première SBI (Nxx) au nœud de réseau (132).

6. Procédé selon la revendication 5, comprenant en outre :
*l'envoi* (704), au premier nœud IMS (141), d'un acquittement que l'abonnement demandé est configuré, l'acquittement devant être transmis au nœud CN (131), via la deuxième SBI (Nxy) pour être en outre transmis au nœud de réseau (132), via la première SBI (Nxx).

7. Procédé selon l'une quelconque des revendications 5 et 6, dans lequel, si un signalement d'un événement lié à un appel est disponible, l'envoi de celui-ci avec l'acquittement.

8. Procédé selon la revendication 7, dans lequel l'un quelconque des cas suivants existe :
- le nœud CN (131) est représenté par un nœud de fonction d'exposition de réseau, NEF,
- le nœud de réseau (132) est représenté par un nœud de fonction d'application, AF,
- le premier nœud IMS (141) est représenté par un nœud IMS de serveur d'abonné de rattachement, HSS,
- le deuxième nœud IMS (142) est représenté par un serveur d'applications IMS, IMS-AS,
- l'UE (120) comprend un ou plusieurs UE ou un groupe d'UE,
- le troisième identifiant qui identifie le premier UE (120) comprend une liste d'UE identifiant l'UE (120) respectif et : les un ou plusieurs UE (120, 122) ou les UE dans le groupe d'UE, et
- l'événement lié à un appel comprend l'un quelconque parmi :
un état de session de l'UE,
des événements liés à un appel de l'UE,
des interactions de services supplémentaires de l'UE, et
un service supplémentaire déclenché.

9. Procédé réalisé par un nœud de réseau central, CN, (131), pour gérer un abonnement d'exposition d'un événement de surveillance lié à un appel de système multimédia de protocole Internet, IMS, dans un réseau de communication (100), le procédé comprenant :
*la réception* (801), depuis un nœud de réseau (132) via une première interface basée sur service, SBI, (Nxx), d'une demande d'un abonnement pour exposer l'événement de surveillance lié à un appel IMS pour un équipement utilisateur, UE, (120) dans un réseau IMS (102), laquelle demande indique un premier identifiant qui identifie un type de l'événement de surveillance lié à un appel, un deuxième identifiant qui identifie le nœud de réseau (132) duquel provient la demande, et un troisième identifiant qui identifie l'UE (120),
*l'envoi* (802), à un premier nœud IMS (141), via une deuxième SBI (Nxy), de la demande et d'un quatrième identifiant qui identifie le nœud CN (131),
*la transmission* (803), au nœud de réseau (132), via la première SBI (Nxx), d'un acquittement reçu depuis le premier nœud IMS (141), via la deuxième SBI (Nxy), indiquant que l'abonnement demandé est configuré,
dans lequel l'abonnement, lorsqu'il est configuré, permet à un deuxième nœud IMS (142) de, lorsqu'il est détecté un événement lié à un appel qui est lié à l'abonnement configuré, signaler l'événement lié à un appel par l'un quelconque parmi :
- un signalement direct via une troisième SBI (Nyy) au nœud CN (131), ou
- un signalement indirect au nœud CN (131) utilisant la deuxième SBI (Nxy), via le premier nœud IMS (141) utilisant la quatrième SBI (N71),
le signalement d'événement lié à un appel étant transmis par le nœud CN (131) via une première SBI (Nxx) au nœud de réseau (132).

10. Procédé selon la revendication 9, dans lequel, si un signalement d'un événement lié à un appel est disponible, l'envoi de celui-ci avec l'acquittement.

11. Procédé selon l'une quelconque des revendications 9 et 10, dans lequel l'un quelconque des cas suivants existe :
- le nœud CN (131) est représenté par un nœud de fonction d'exposition de réseau, NEF,
- le nœud de réseau (132) est représenté par un nœud de fonction d'application, AF,
- le premier nœud IMS (141) est représenté par un nœud IMS de serveur d'abonné de rattachement, HSS,
- le deuxième nœud IMS (142) est représenté par un serveur d'applications IMS, IMS-AS,
- l'UE (120) comprend un ou plusieurs UE ou un groupe d'UE, et
- l'événement lié à un appel comprend l'un quelconque parmi :
un état de session de l'UE,
des événements liés à un appel de l'UE,
des interactions de services supplémentaires de l'UE,
le troisième identifiant qui identifie le premier UE (120) comprend une liste d'UE identifiant l'UE (120) respectif et : les un ou plusieurs UE (120, 122) ou les UE dans le groupe d'UE, et
un service supplémentaire déclenché.

12. Premier nœud de système multimédia de protocole Internet, IMS, (141), configuré pour gérer un abonnement d'exposition d'un événement de surveillance lié à un appel IMS dans un réseau de communication (100), le premier nœud IMS (141) étant en outre configuré pour :
*recevoir*, via une deuxième interface basée sur service, SBI, (Nxy) depuis un nœud de réseau central, CN, (131), une demande d'un abonnement pour exposer l'événement de surveillance lié à un appel IMS pour un équipement utilisateur, UE, (120) dans un réseau IMS (102), laquelle demande est adaptée pour indiquer un premier identifiant qui identifie un type de l'événement de surveillance lié à un appel, un deuxième identifiant qui identifie un nœud de réseau (132) duquel provient la demande, un troisième identifiant qui identifie l'UE (120), et un quatrième identifiant qui identifie le nœud CN (131),
lorsque l'UE (120) a été enregistré dans le premier nœud IMS (141), pour une identité IMS, *recevoir*, depuis un deuxième nœud IMS (142), via une quatrième SBI (N71), un cinquième identifiant qui identifie le deuxième nœud IMS (142) sélectionné pour desservir l'UE (120) dans le réseau IMS (102),
sur la base du cinquième identifiant, *envoyer* la demande d'abonnement au deuxième nœud IMS (142) via une quatrième SBI (N71), instruisant au deuxième nœud IMS (142) de configurer l'abonnement demandé,
dans lequel l'abonnement, lorsqu'il est configuré, est adapté pour permettre au deuxième nœud IMS (142) de, lorsqu'il est détecté un événement lié à un appel qui est lié à l'abonnement configuré, signaler l'événement lié à un appel par l'un quelconque parmi :
- un signalement direct via une troisième SBI (Nyy) au nœud CN (131), ou
- un signalement indirect au nœud CN (131) utilisant la deuxième SBI (Nxy), via le premier nœud IMS (141) utilisant la quatrième SBI (N71),
le signalement d'événement lié à un appel étant transmis par le nœud CN (131) via une première SBI (Nxx) au nœud de réseau (132).

13. Premier nœud IMS (141) selon la revendication 12, étant en outre configuré pour :
*envoyer*, au nœud CN (131), via la deuxième SBI (Nxy), un acquittement que l'abonnement demandé est configuré, l'acquittement étant adapté pour être transmis au nœud de réseau (132), l'acquittement étant adapté pour être envoyé dans l'un des cas suivants :
- avant que l'UE (120) ne soit enregistré dans le premier nœud IMS (141) pour l'identité IMS,
- après que l'UE (120) a été enregistré dans le premier nœud IMS (141) pour une identité IMS.

14. Deuxième nœud de système multimédia de protocole Internet, IMS, (142), configuré pour gérer un abonnement d'exposition d'un événement de surveillance lié à un appel IMS dans un réseau de communication (100), le deuxième nœud IMS (142) étant en outre configuré pour :
*envoyer*, à un premier nœud IMS (141), un cinquième identifiant qui identifie le deuxième nœud IMS (142) comme étant sélectionné pour desservir l'UE (120), l'UE (120) étant adapté pour avoir été enregistré dans le premier nœud IMS (141), pour une identité d'IMS,
*recevoir*, depuis le premier nœud IMS (141), via une quatrième interface basée sur service, SBI, (N71), une demande de configuration d'un abonnement pour exposer l'événement de surveillance lié à un appel IMS pour l'UE (120) dans un réseau IMS (102), laquelle demande est adaptée pour indiquer un premier identifiant qui identifie un type de l'événement de surveillance lié à un appel, un troisième identifiant qui identifie l'UE (120), et un quatrième identifiant qui identifie un nœud de réseau central, CN, (131),
*configurer* l'abonnement demandé, en permettant au deuxième nœud IMS (142) de, lorsqu'il est détecté un événement lié à un appel qui est lié à l'abonnement configuré, signaler l'événement lié à un appel par l'un quelconque parmi :
- un signalement direct via une troisième SBI (Nyy) au nœud CN (131), ou
- un signalement indirect au nœud CN (131) utilisant la deuxième SBI (Nxy), via le premier nœud IMS (141) utilisant la quatrième SBI (N71),
le signalement d'événement lié à un appel étant adapté pour être transmis par le nœud CN (131) via une première SBI (Nxx) au nœud de réseau (132).

15. Nœud de réseau central, CN, (131), configuré pour gérer un abonnement d'exposition d'un événement de surveillance lié à un appel de système multimédia de protocole Internet, IMS, dans un réseau de communication (100), le nœud CN (131) étant en outre configuré pour :
*recevoir*, depuis un nœud de réseau (132) via une première interface basée sur service, SBI, (Nxx), une demande d'un abonnement pour exposer l'événement de surveillance lié à un appel IMS pour un équipement utilisateur, UE, (120) dans un réseau IMS (102), laquelle demande est adaptée pour indiquer un premier identifiant qui identifie un type de l'événement de surveillance lié à un appel, un deuxième identifiant qui identifie un nœud de réseau (132) duquel provient la demande, et un troisième identifiant qui identifie l'UE (120),
*envoyer*, à un premier nœud IMS (141), via une deuxième SBI (Nxy), la demande et un quatrième identifiant qui identifie le nœud CN (131),
*transmettre*, au nœud de réseau (132), via la première SBI (Nxx), un acquittement reçu depuis le premier nœud IMS (141), via la deuxième SBI (Nxy), adapté pour indiquer que l'abonnement demandé est configuré,
dans lequel l'abonnement, lorsqu'il est configuré, est adapté pour permettre au deuxième nœud IMS (142) de, lorsqu'il est détecté un événement lié à un appel qui est lié à l'abonnement configuré, signaler l'événement lié à un appel par l'un quelconque parmi :
- un signalement direct via une troisième SBI (Nyy) au nœud CN (131), ou
- un signalement indirect au nœud CN (131) utilisant la deuxième SBI (Nxy), via le premier nœud IMS (141) utilisant la quatrième SBI (N71),
le signalement d'événement lié à un appel étant adapté pour être transmis par le nœud CN (131) via une première SBI (Nxx) au nœud de réseau (132).
